# EUROPÄISCHE PATENTSCHRIFT

(11) **EP 1 609 561 B1**
(45) Veröffentlichungstag und Bekanntmachung des Hinweises auf die Patenterteilung: **07.06.2017**
(21) Anmeldenummer: 05013265.3
(22) Anmeldetag: 20.06.2005
(51) Int. Cl.: B23P 19/06, F16B 37/06

(54) **Verfahren zur Herstellung eines Zusammenbauteils bestehend aus einem Blechteil und einem an diesem angebrachten Funktionselement, Blechteil sowie Zusammenbauteil**
Method for manufacturing an assembled component consisting of a sheet plate and a functional element attached at said sheet plate, sheet plate and as well as an assembled component
Procédé pour fabriquer un composant d'assemblage comprenant une pièce de tôle et un élément fonctionnel fixé sur cette pièce de tôle, pièce de tôle ainsi qu' un composant d'assemblage

(30) Priorität: 23.06.2004 DE 102004030223; 09.09.2004 DE 102004043688
(43) Veröffentlichungstag der Anmeldung: 28.12.2005
(73) Patentinhaber: PROFIL Verbindungstechnik GmbH & Co. KG, 61381 Friedrichsdorf (DE)
(72) Erfinder: Jiri, Babej, 45432 Lich (DE)
(74) Vertreter: Manitz Finsterwald Patentanwälte PartmbB

(56) Entgegenhaltungen:
- EP-A1- 0 539 793
- EP-A1- 0 678 679
- EP-A1- 0 958 100
- EP-A1- 1 116 891
- EP-A1- 1 202 834
- EP-A2- 0 993 902
- WO-A1-02/053924
- DE-A1- 3 447 006
- DE-A1- 19 639 007
- US-A- 1 883 906
- US-A- 2 984 180
- US-A1- 2004 047 729

## Beschreibung

Die vorliegender Erfindung betrifft ein Verfahren zur Herstellung eines Zusammenbauteils bestehend aus einem Blechteil und einem an diesem durch einen Nietvorgang oder durch einen Niet- und Stanzvorgang oder durch einen Einpressvorgang angebrachten Funktionselement, wobei das Blechteil im Bereich der Anbringung des Funktionselements mit einer Prägung vorgesehen ist. Ferner betrifft die Erfindung ein Blechteil sowie ein Zusammenbauteil, die zur Anwendung in dem Verfahren geeignet sind.

Ein Verfahren der eingangs genannten Art ist aus dem europäischen Patent 0 539 793 bekannt und wird dort mit einem Funktionselement in Form einer Nietmutter beschrieben. Dort wird ein Blechteil mit einer Prägung in Form eines ringförmigen Kragens um ein vorgestanztes Loch vorgesehen und der zylindrische Nietabschnitt des Funktionselements wird von der Seite des über die Ebene des Blechteils vorstehenden Ringkragens in das Stanzloch hineingeführt, so dass eine ringförmige Auflagefläche des Funktionselements, die den Übergang zwischen dem Körper des Mutterelements und dem zylindrischen Nietteil bildet, zur Anlage an der Stirnseite des ringförmigen Kragens kommt. Dreieckige nasenförmige Verdrehsicherungsrippen sind im Übergangsbereich zwischen der ringförmigen Anlagefläche und dem zylindrischen Nietabschnitt vorgesehen. Anschließend wird das Mutterelement so gegen das Blechteil gepresst, dass mittels einer unterhalb des Blechteils angeordneten Matrize der zylindrische Nietabschnitt zu einem Nietbördel umgeformt und gleichzeitig der ringförmige Kragen, der eine konusförmige Gestalt aufweist, zumindest teilweise flach gepresst wird. Hierdurch wird der Durchmesser des Stanzlochs verkleinert und gleichzeitig der Außendurchmesser des Nietabschnitts vergrößert, so dass ein erheblicher "Würgegriff" zwischen dem Blechteil und dem Mutterelement um den Nietabschnitt herum erfolgt. Ferner werden die Verdrehsicherungsnasen in das Blechmaterial des Blechteils hinein gepresst und sorgen für eine ausgezeichnete Verdrehsicherung.

Ein verwandtes Verfahren wird auch zur Anbringung von so genannten RND-Elementen (europäisches Patent 1 116 891) an Blechteilen verwendet. Es handelt sich bei den Befestigungselementen gemäß dem europäischen Patent 0 539 793 und 1 116 891 um so genannte Nietelemente, die in vorgestanzte Löcher im Blechteil eingesetzt werden und am Blechteil durch einen Nietvorgang befestigt werden. Es ist allerdings nicht zwingend erforderlich, das Blech vorzulochen, sondern es gibt auch Befestigungselemente, die mit einem Blechteil vernietet werden, ohne dass der Nietabschnitt des Elements das Blechteil durchdringt. Dies ist beispielsweise bei dem Nietelement gemäß EP-A-0 993 902 der Fall. Ferner gibt es Funktionselemente, die durch einen so genannten Niet- und Stanzvorgang an einem Blechteil angebracht werden. In diese Kategorie fallen beispielsweise die SBF-Bolzenelemente der Fa. Profil-Verbindungstechnik GmbH & Co KG, die in der deutschen Patentschrift 34 47 006 beschrieben sind bzw. die entsprechenden Mutterelemente, die mit einem ähnlichen Verfahren an einem Blechteil angebracht werden. Allerdings wird bei diesen Elementen das Blechteil vor der Anbringung nicht mit einer Vorprägung versehen, sondern die Prägung des Blechteils erfolgt bei der Anbringung des Funktionselements in einem ersten Stadium des Anbringungsverfahrens.

Ferner sind im Stand der Technik so genannte Einpresselemente bekannt, die in ein Blechteil eingepresst werden, und zwar derart, dass das Blechteil um das Element herum gewissermaßen fließt und zu einer formschlüssigen Verhakung des Elements mit dem Blechteil führt, ohne dass ein eigentlicher Nietvorgang stattfindet. Ein Beispiel für ein solches Einpresselement bzw. einen Einpressvorgang ist das so genannte EBF-Element der Fa. Profil-Verbindungstechnik GmbH & Co KG, das zusammen mit dem Verfahren zu dessen Anbringung im europäischen Patent 0 678 679 B bzw. in der späteren europäischen Patentschrift EP-B-0958100 beschrieben ist. Die letztgenannte europäische Patentschrift beschreibt außerdem eine Möglichkeit, ein EBF-Element selbststanzend in ein Blechteil einzubringen. Auch die oben als Nietelemente bezeichneten RND-Elemente können selbststanzend in Blechteile eingebracht werden, selbst wenn dies nicht häufig praktiziert wird.

Die Bezeichnung Funktionselement ist aber nicht auf Befestigungselemente beschränkt, sondern gilt im Fachbereich als Bezeichnung für eine Vielzahl anderer Elemente, die bestimmte Funktionen erfüllen und welche durch Nietvorgänge, durch Stanz- und Nietvorgänge oder durch Einpressvorgänge an Blechteilen befestigt werden können. Beispielsweise beschreibt die oben genannte EP-B-1202834 unter anderem ein Funktionselement, das mit einem Stanz- und Nietvorgang an einem Blechteil befestigt wird, wobei eine Realisierung des entsprechenden Elements in Form eines so genannten Kugelbolzens erfolgt. Das entsprechende Element ist in der europäischen Patentanmeldung EP-A-01989624.0 beschrieben, wobei der Kugelkopf dieses Elements dazu dient, eine Kugelpfanne aufzunehmen, um beispielsweise als Gasdämpferabstützung für eine Motorhaube oder Heckklappe verwendet zu werden. Ferner sind Funktionselemente bekannt, die als Zapfen für die Lagerung von drehbaren Teilen dienen oder beispielsweise mit einer Klippaufnahme vorgesehen sind, die für die Klippbefestigung von Teppichen, Bremsleitungen oder Kabelbäumen in Pkws dienen. Ferner sind Funktionselemente mit einer tannenbaumartigen Struktur bekannt, die für untergeordnete Befestigungszwecke verwenden werden können in Zusammenarbeit mit Hohlteilen, die auf die Tannenbaumstruktur aufgedrückt werden.

Mit den obigen Erläuterungen soll klargestellt werden, dass die vorliegende Erfindung bei einer Vielzahl von verschiedenen Funktionselementen und bei einer Vielzahl an sich bekannter Anbringungstechniken verwenden werden kann.

Bei vielen bekannten Funktionselementen besteht die Notwendigkeit, das jeweilige Element verdrehsicher an das Blechteil anzubringen. Zwar kann eine gewisse Verdrehsicherung durch die so genannte Lochlaibung erreicht werden, d.h. die Verdrehsicherung, die durch Reibungskräfte zwischen dem Blechteil und dem Funktionselement entstehen, doch meistens wird das Funktionselement mit Verdrehsicherungsmerkmalen, beispielsweise in Form von Rippen und/oder Nuten, in einem Bereich, der bei Herstellung der Verbindung zwischen dem Blechteil und dem Funktionselement in Berührung mit dem Blechteil gelangt, versehen. Solche Merkmale am Funktionselement führen zu komplementären Formen am Blechteil und es wird eine Art Verzahnung zwischen dem Funktionselement und dem Blechteil erreicht, die die Verdrehsicherung sicherstellt. Auch ist es bekannt, zur Erzeugung der Verdrehsicherung oder zur Steigerung des Verdrehwiderstandes einen Klebstoff im Fügebereich zwischen dem Blechteil und dem Funktionselement zu verwenden.

In der US 1 883 906 ist ein Verfahren zum Befestigen von Muttern an Metallplatten, insbesondere an Teilen von Kraftfahrzeugrahmen oder Fahrzeugkarosserien, beschrieben. Dabei ist eine jeweilige Mutter mit einem Ansatz versehen, der in eine in der Metallplatte vorgesehene Öffnung einsetzbar ist, deren Rand an der Unterseite der Metallplatte zur Bildung einer Verzahnung verformt ist. Der in die Öffnung der Metallplatte eingesetzte Ansatz wird zum Vernieten der Mutter mit der Metallplatte radial nach außen und gegen die Metallplatte gebogen. Dabei wird das Metall des Ansatzes der Mutter in die Aussparungen der an der Metallplatte vorgesehenen Verzahnung gepresst, um die Mutter drehfest mit der Metallplatte zu verbinden.

In der US 2004/047729 A1 ist ein Verfahren zur Befestigung von Hutmuttern an einem aus Blechteilen bestehenden Pumpengehäuse beschrieben. Dabei wird in ein jeweiliges Blechteil eine Öffnung mit einer auf der von der zugeordneten Hutmutter abgewandten Vorderseite des Blechteils vorgesehenen Verzahnung eingebracht. Ein von der Rückseite des Blechteils her in die Öffnung eingesetzter, in seiner Länge im Wesentlichen der Dicke des Blechteils entsprechender zylindrischer Abschnitt einer jeweiligen Hutmutter wird mittels eines Stempels so gegen das Blechteil verstemmt, dass er sich in die auf der Vorderseite des Blechteils vorgesehene Verzahnung einschneidet, um die Hutmutter drehfest mit dem Blechteil zu verbinden.

In der DE 196 39 007 A1 ist ein Verfahren zum Vernieten eines Befestigungselements in einem Blechwerkstück beschrieben, das mit einem eine polygonale Kontur aufweisenden Aufnahmeloch versehen ist. Die Lochkontur wird durch einen das Aufnahmeloch stanzenden Lochstempel bestimmt. Bei dem Befestigungselement handelt es sich um eine Gewindebuchse mit einem an einen mit einem Innengewinde versehenen Buchsenteil angeformten zylindrischen Nietkragen, der in das Aufnahmeloch des Blechwerkstücks eingesetzt und mit diesem mittels eines Nietstempels vernietet wird, der dazu einen Nietkopf aufweist, der mit Rippen versehen ist, deren Form und Anordnung der polygonalen Kontur des Aufnahmelochs entsprechen und die mit den Ausnehmungen der polygonalen Kontur des Aufnahmelochs ausgerichtet sind. Durch die polygonale Umformung des Nietkragens mittels des an die polygonale Kontur des Aufnahmelochs angepassten Nietstempels wird die Gewindebuchse drehfest mit dem Blechwerkstück verbunden.

In der US 2 984 180 ist ein Verfahren zur Befestigung von mit einem Innengewinde versehenen Sockeln an einer zylindrischen Wand eines aus einem metallischen Material wie zum Beispiel Stahl oder dergleichen eines Bombengehäuses beschrieben. Ein jeweiliger Sockel umfasst einen Kopf, der über eine Schulter in einen Schaft übergeht, der durch eine jeweilige in die Wand eingebrachte Öffnung hindurchgeführt und mit der Wand vernietet wird. Die Wand besitzt im Bereich der Öffnung einen Abschnitt, der zur Rückseite der Wand hin, von der aus der Schaft durch die Öffnung hindurchgeführt wird, versetzt ist und auf der Rückseite und der Vorderseite jeweils einen zu den angrenzenden Wandabschnitten parallelen Flächenbereich aufweist, an den im montierten Zustand die zwischen dem Kopf und dem Schaft des Sockels vorgesehene Schulter bzw. ein umgebördelter Rand des Schaftes des Sockels anliegt. Um den Sockel drehfest mit der Wand zu verbinden, kann die Öffnung auf der Vorderseite der Wand mit einer radialen Kerbe versehen sein, in die beim Umbördeln des Randes des Schaftes ein Teil dieses Randes fließt oder gedrückt wird.

Aufgabe der vorliegenden Erfindung ist es, ein Verfahren der eingangs genannten Art weiterzubilden, so dass eine Verdrehsicherung zwischen dem Blechteil und dem Funktionselement auf eine neue Art und Weise zustande kommt, die auch genutzt werden kann, um Herstellungsvorteile zu erreichen. Ferner sollen ein Blechteil sowie ein Zusammenbauteil angegeben werden, die zur Anwendung in dem Verfahren geeignet sind. Erfindungsgemäß wird die Aufgabe durch ein Verfahren mit den Merkmalen des Anspruchs 1, ein Verfahren mit den Merkmalen des Anspruchs 11, ein Blechteil mit den Merkmalen des Anspruchs 17 und ein Zusammenbauteil mit den Merkmalen des Anspruchs 33 gelöst. Bevorzugte Ausgestaltungen des erfindungsgemäßen Verfahrens sowie bevorzugte Ausführungsformen des erfindungsgemäßen Blechteils und des erfindungsgemäßen Zusammenbauteils ergeben sich aus den Unteransprüchen.

In entsprechender Weise zeichnet sich ein erfindungsgemäßes Blechteil dadurch aus, dass die Prägung vor Anbringung des Funktionselements herstellt wird und aus einer Folge von relativ zueinander erhöhten und vertieften Bereichen besteht.

Der Erfindungsgedanke ist daher darin zu sehen, dass anstatt Verdrehsicherungsmerkmale am Funktionselement vorzusehen eine besondere Art der Prägung des Blechteils vorgenommen wird, so dass die Verdrehsicherungsmerkmale sozusagen am Blechteil vorgesehen sind. Die Prägung des Blechteils führt dann bei Anbringung des Funktionselements zu einer komplementären Formgebung des Funktionselements im Bereich des Funktionselements, der mit der Prägung in Anlage kommt. Hierdurch entsteht eine Art Verzahnung zwischen dem Funktionselement und dem Blechteil, die die notwendige Verdrehsicherung sicherstellt. Es ist allerdings auch möglich, die erfindungsgemäße Prägung des Blechteils auch mit einem Funktionselement zu verwenden, das über eigene Verdrehsicherungsmerkmale verfügt.

Es ist zunächst überraschend, dass es auf diese Weise gelingt, eine Verdrehsicherung oder eine ergänzende Verdrehsicherung zustande zu bringen. In der Vergangenheit wurde davon ausgegangen, dass die Funktionselemente aus einem Material mit einer im Vergleich zum Blechteil höheren Festigkeit bestehen, wodurch der Gedanke nicht vorhanden war, dass das weichere Blechmaterial ausgeprägte Abdrücke im härteren Material des Funktionselements erzeugen könnte. Es hat sich aber überraschender Weise herausgestellt, dass genau dies der Fall ist. Der Erfolg dieser Methode mag etwas damit zu tun haben, dass durch die Prägung des Blechteils dieses eine Art Kaltbefestigung erfährt, wodurch die Härte des Blechteils, d.h. die Festigkeit des Blechteils, im Vergleich zum Funktionselement gesteigert wird, selbst wenn sie den Festigkeitswert des Funktionselements noch nicht erreicht. Es mag auch etwas damit zu tun haben, dass die Verdrehsicherungsmerkmale lokal zu hohen Flächenpressungen am Funktionselement führen, die bei der dynamischen Anbringung eines Funktionselements ausreichen, um die komplementäre Form der Prägung am Funktionselement zu erzeugen.

Ausgehend von dieser Situation wurde es dem Anmelder klar, dass, wenn diese Vorgehensweise mit Blechteilen gelingt, die im Vergleich zum Funktionselement eine geringere Festigkeit aufweisen, es um so eher mit höherfesten Blechen, die zunehmend in gewissen technischen Bereichen, vor allem im Automobilbau verwendet werden, gelingen müsste. Diese Erkenntnis führt auch zu dem Ergebnis, dass es bei Verwendung von höherfesten Blechen nicht unbedingt notwendig ist, Funktionselemente zu verwenden, die eine im Vergleich zum Blechmaterial höhere Festigkeit aufweisen. In vielen Fällen können somit Befestigungselemente sogar mit Vorteil verwendet werden, die eine geringere Festigkeit als die des Blechmaterials aufweisen. Dies spart bei Herstellung der Funktionselemente nicht nur den Einsatz von eher teureren Materialien, sondern erspart darüber hinaus auch kostspielige Herstellungsschritte, wie etwa die Wärmebehandlung der für die Funktionselemente verwendeten Materialien. Die Möglichkeit, Materialien für Befestigungselemente zu verwenden, die eine im Vergleich zum Blechmaterial geringere Festigkeit aufweisen, ermöglicht es, Schraubbefestigungen zu verwenden, die im Bezug auf Bruchdehnung oder Ermüdungserscheinungen weniger kritisch sind.

Es gelingt bei entsprechender Bemessung der Anlagefläche des Funktionselements auch, eine Art der Anbringung zu erreichen, bei der die zulässige Flächenpressung im Bereich der Anlagefläche des Funktionselements nicht überschritten wird, und zwar selbst dann nicht, wenn höherfestes Blech verwendet wird.

Ein besonderer Vorteil der Erfindung ist darin zu sehen, dass die bisher für notwendig erachteten Verdrehsicherungsmerkmale am Funktionselement entweder vollständig weggelassen werden können oder durch wenige, leichter herzustellende Verdrehsicherungsmerkmale ersetzt werden können, da die besondere Prägung des Blechteils zu einer deutlichen Steigerung der Verdrehsicherungswerte führt oder vollständig zur Sicherstellung der erforderlichen Verdrehsicherung ausreichen. Durch das Weglassen der bisherigen Verdrehsicherungsmerkmale am Funktionselement bzw. durch die Vereinfachung der Verdrehsicherungsmerkmale können Kosten bei der Herstellung der Funktionselemente eingespart werden, da die entsprechenden Werkzeuge, häufig Kaltschlagwerkzeuge, dann weniger Verschleiß unterliegen bzw. eine weniger kritische Formgebung erhalten. Zwar müssen die Werkzeuge zur Prägung des Blechteils entsprechend komplizierter ausgelegt werden - im Vergleich zu einer Prägung in Form eines Ringkragens ohne vertiefte oder erhöhte Bereiche - die Zusatzkosten sind jedoch durchaus erträglich, zumal die Prägung üblicherweise in einer Herstellungsstufe des Blechteils in einer ohnehin vorhandenen Presse erfolgt, während bei Herstellung eines Funktionselements mit Kaltschlagwerkzeugen mehrere formgebende Herstellungsschritte erforderlich sind, so dass eine entsprechend große Anzahl von Kaltschlagwerkzeugen im Spiel sind.

Die Folge von relativ zueinander erhöhten oder vertieften Bereichen wird üblicherweise ringförmig ausgeführt, kann aber polygonförmig, beispielsweise rechteckig oder quadratisch sein, wenn die Querschnittsform des Funktionselement dies erfordert oder sinnvoll macht. Ferner könnte die Folge auch linear sein, wenn das erfindungsgemäße Verfahren zur Anbringung von rechteckigen Elementen verwendet wird, die beispielsweise nur an zwei Längsbereichen oder -kanten eine Verdrehsicherung erfordern. Mit anderen Worten kann die Erfindung ohne weiteres auch mit solchen rechteckigen oder quadratischen Funktionselementen verwendet werden, selbst wenn die Folge nicht die Form eines geschlossenen Rings aufweist.

Die Folge von relativ zueinander erhöhten oder vertieften Bereichen kann die verschiedensten konkreten Formen annehmen.

Bei einer ersten erfindungsgemäßen Variante besteht die Folge aus erhöhten Bereichen, die zu Vertiefungen im Funktionselement führen und aus gegenüber den erhöhten Bereichen vertieften Flächenbereichen, die zumindest im Wesentlichen zu keiner Verformung der Funktionselemente führen. Dabei können die vertieften Bereiche flächenmäßig größer sein als die erhöhten Bereiche und/oder jeweils eine Fläche aufweisen, die zumindest im Wesentlichen parallel zu einem jeweiligen mit dieser in Anlage tretenden Bereich des Funktionselement liegt. Dagegen können die erhöhten Bereiche gerundete oder spitz zulaufende Scheitel aufweisen. Sie können in Draufsicht kreisrund, oval, polygonal, länglich oder anderweitig geformt ausgebildet werden.

Bei einer Ausbildung der vertieften Bereiche jeweils mit einer Fläche, die zumindest im Wesentlichen parallel zu einem jeweiligen mit dieser in Anlage tretenden Bereich des Funktionselements liegt, kann sichergestellt werden, dass die Flächenpressungskräfte, die dort auf das Funktionselement einwirken, unterhalb des kritischen Werts liegen, bei dem eine Verformung des Funktionselements in diesem Bereich vorkommt. Dagegen können in den erhöhten Bereichen der Prägung, d.h. im Bereich der gerundeten oder spitz zulaufenden Scheitel, durchaus Flächenpressungswerte auftreten, die zu einer komplementären Formgebung des Funktionselements führen und hierdurch zu der oben erwähnten Verzahnung zwischen dem Funktionselement und dem Blechteil führen, die zur Sicherstellung der Verdrehsicherung erforderlich ist. Zwar kann es sein, dass die erhöhten Bereiche der Prägung durch das Anbringen des Funktionselements selbst verformt werden, dennoch führt es zu einer entsprechenden Verformung des Funktionselements, so dass die erwünschte Verzahnung erreicht wird. Natürlich muss das Material des Funktionselements, das im Bereich der erhöhten Bereiche der Prägung verdrängt wird, irgendwohin fließen. Eine Möglichkeit dies zu gewährleisten, besteht darin, die Formgebung des Funktionselements so zu wählen, dass Bereiche vorhanden sind, wo das verdrängte Material hin fließen kann, ohne dass dies negativ auf das so entstehende Zusammenbauteil wirkt. Schließlich kann es auch durchaus vorkommen, dass das verdrängte Material in einen Bereich gelangt, der den vertieften Bereichen der Prägung gegenüber liegt.

Ferner besteht die Möglichkeit, dass die Folge aus erhöhten Bereichen, die zu Vertiefungen im Funktionselement führen, und aus gegenüber der erhöhten Bereichen vertieften Bereichen besteht, die zu Erhöhungen am Funktionselement führen.

Bei dieser Ausführungsform kann das Material des Funktionselements, das durch die erhöhten Bereiche der Prägung verdrängt wird, in Erhöhungen am Funktionselement fließen, die den vertieften Bereichen der Prägung gegenüber liegen. Auch diese Ausführung führt somit zu einer ausgeprägten Verzahnung zwischen dem Funktionselement und dem Blechteil.

Eine weitere Möglichkeit besteht darin, dass die Folge aus vertieften Bereichen besteht, die zu Erhöhungen am Funktionselement führen und aus gegenüber den vertieften Bereichen erhöhten Flächenbereichen besteht, die zumindest im Wesentlichen zu keiner Verformung am Funktionselement führen. Bei dieser Ausführungsform wird davon ausgegangen, dass durch die erheblichen Anbringungskräfte, die auf das Funktionselement ausgeübt werden, Material des Befestigungselements plastisch in die Bereiche fließen kann, die den vertieften Bereichen der Prägung gegenüber liegen und auf diese Weise für die erwünschte Verzahnung zwischen dem Funktionselement und dem Blechteil führen. Die Flächen der erhöhten Bereiche können wie bisher erläutert jeweils mit einer Fläche ausgestattet werden, die zumindest im Wesentlichen parallel zu einem jeweiligen mit dieser in Anlage tretenden Bereich des Funktionselements liegt und die so groß bemessen ist, dass eine Flächenpressung entsteht, die unter dem kritischen Wert liegt, so dass eher kein Material aus diesen Bereichen verdrängt wird. Es bestünde aber auch die Möglichkeit, die Flächen so zu bemessen, dass von hier aus doch Material in Bereiche des Funktionselements fließt, die den vertieften Bereichen der Prägung gegenüber liegen.

Eine andere Möglichkeit besteht darin, dass die Folge aus erhöhten Bereichen, die zu Vertiefungen im Funktionselement führen und aus gegenüber den erhöhten Bereichen vertieften Bereichen, die zu Erhöhungen am Funktionselement führen besteht sowie aus Zwischenbereichen, die zumindest im Wesentlichen zu keiner Verformung am Funktionselement führen. Bei dieser Ausführungsform können die erhöhten Bereiche eine gerundete oder spitz zulaufende konvexe Form und die vertieften Bereiche eine gerundete oder spitz zulaufende konkave Form aufweisen.

Dagegen sind die Zwischenbereiche flächenmäßig vorzugsweise größer als die vertieften Bereiche und die erhöhten Bereiche weisen jeweils eine Fläche auf, die zumindest im Wesentlichen parallel zu einem jeweiligen mit dieser in Anlage tretenden Bereich des Funktionselement liegt, wodurch die Flächenpressung, die am Funktionselement bei Anbringung des Funktionselements am Blechteil in diesem Bereich auftritt, unterhalb des kritischen Wertes liegt, so dass hier keine ausgeprägte Formänderung des Funktionselements auftritt. Auch eine solche Ausführungsform führt zu der gewünschten Verzahnung zwischen dem Funktionselement und dem Blechteil.

Es ist keinesfalls erforderlich, dass die Folge aus abwechselnd angeordneten Erhöhungen und Vertiefungen bzw. aus Erhöhungen, Zwischenbereichen und Vertiefungen usw. besteht, sondern es können beliebige Kombinationen zum Einsatz gelangen, beispielsweise kann eine Erhöhung von zwei Vertiefungen gefolgt werden und erst dann erfolgt eine weitere Erhöhung oder es können abwechselnd eine Vertiefung und ein Zwischenbereich zwischen zwei jeweils benachbart angeordneten erhöhten Bereichen vorliegen. Üblicherweise ergibt sich durch die konkret gewählte Anordnung eine sich periodisch wiederholende Folge von Erhöhungen und Vertiefungen bzw. von Erhöhungen, Zwischenbereichen und Vertiefungen bei der Prägung des Blechteils. Dies ist aber nicht zwangsläufig der Fall.

Besonders bevorzugte Varianten der erfindungsgemäßen Verfahren bzw. des erfindungsgemäßen Blechteils sowie des Zusammenbauteils ergeben sich aus den weiteren abhängigen Patentansprüchen.

Solche bevorzugten Ausführungsbeispiele der Erfindung werden nachfolgend anhand der Zeichnungen näher erläutert, in welcher zeigen:
- Fig. 1A-1D: ein erfindungsgemäß vorbereitetes Blechteil in einer Draufsicht (Fig. 1A), eine Schnittzeichnung (Fig. 1B nach der Schnittebene IB-IB der Fig. 1A) und in zwei perspektivischen Darstellungen von oben (Fig. 1C) und von unten (Fig. 1D),
- Fig.2A-2B: die Anbringung eines Funktionselement entsprechend dem europäischen Patent EP 1202834 B1 auf dem vorbereiteten Blechteil der Fig. 1A-1D,
- Fig. 3A-3E: eine alternative erfindungsgemäße Blechvorbereitung in einer Draufsicht, in zwei Schnittzeichnungen sowie in zwei perspektivischen Darstellungen von oben bzw. von unten,
- Fig. 4A-4F: eine weitere erfindungsgemäße Blechvorbereitung in einer Draufsicht auf einen Teilbereich des Blechs benachbart zu einem Lochrand und in fünf verschiedenen Schnittzeichnungen,
- Fig. 5A-5D: eine weitere alternative erfindungsgemäße Blechvorbereitung in einer Draufsicht auf einen Teilbereich des Blechs benachbart zu einem Lochrand und in drei verschiedenen Schnittzeichnungen,
- Fig. 6A-6C: eine weitere alternative erfindungsgemäße Blechvorbereitung in einer Draufsicht auf einen Teilbereich des Blechs benachbart zu einem Lochrand und in zwei verschiedenen Schnittzeichnungen,
- Fig. 7: eine weitere Alternative einer erfindungsgemäßen Blechvorbereitung, jedoch nur von einem Teilbereich des Randes eines Stanzloches,
- Fig. 8: eine Darstellung ähnlich der Fig. 7, jedoch mit einer anderen erfindungsgemäßen Blechvorbereitung,
- Fig. 9: eine weitere Zeichnung ähnlich der Fig. 7, jedoch von einer noch weiteren erfindungsgemäßen Blechvorbereitung,
- Fig. 10: eine Schnittzeichnung zur Darstellung einer erfindungsgemäßen Blechvorbereitung auf der Oberseite eines Blechteils im Bereich des Lochrandes,
- Fig. 11: eine Darstellung ähnlich der Fig. 10, jedoch von einem Blechteil mit konusförmigen, nach oben stehenden Rand um ein Stanzloch herum,
- Fig. 12: eine weitere Schnittzeichnung einer erfindungsgemäßen Blechvorbereitung, wobei die Blechvorbereitung im Bereich eines konusförmigen Ringkragens vorliegt,
- Fig. 13: eine schematische Darstellung in einem Längsschnitt durch eine andere Ausführungsform des erfindungsgemäßen Verfahrens mit einem Funktionselement, mit einem vorbereiteten Blechteil und mit einer Matrize zur Anbringung des Funktionselementes am Blechteil, und
- Fig. 14: eine Schnittdarstellung des Zusammenbauteils, das sich durch Anbringung des Funktionselementes der Figur 13 an das dort gezeigte Blechteil ergibt.

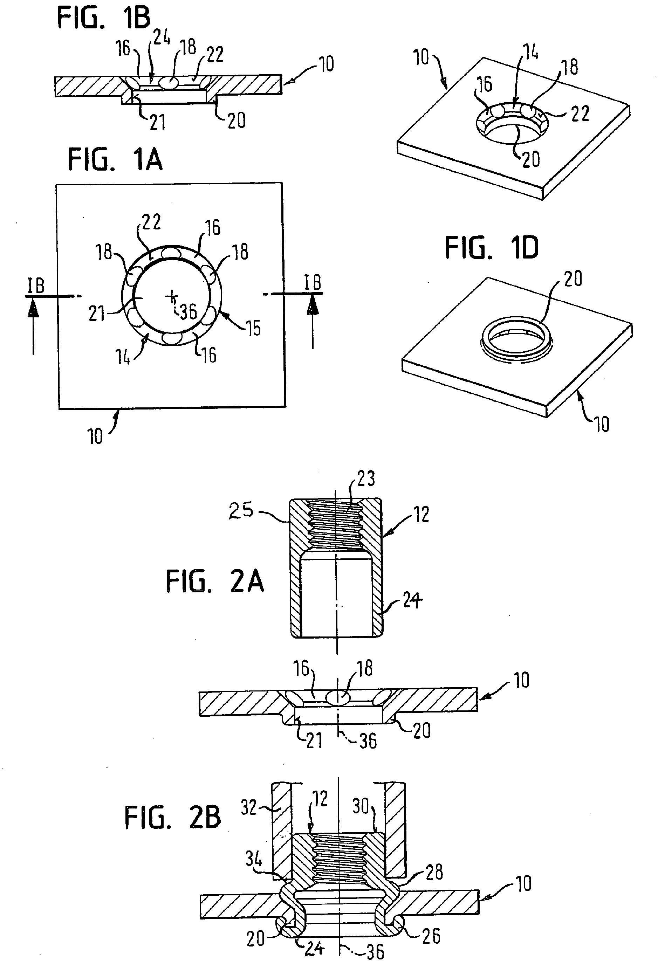

Die Fig. 1A bis 1D zeigen in verschiedenen Darstellungen ein Blechteil 10 zur Verwendung mit einem an diesem durch einen Nietvorgang oder durch einen Niet- und Stanzvorgang angebrachten Funktionselement 12 (Fig. 2A und 2B), wobei das Bauteil 10 im Bereich der Anbringung des Funktionselements mit einer Prägung 14 vorgesehen ist. Diese vor der Anbringung des Funktionselements hergestellte Prägung 14 besteht aus einer Folge von relativ zueinander erhöhten und vertieften Bereichen 16 bzw. 18. Die Folge 15 ist hier ringförmig dargestellt, könnte aber bei Bedarf, falls die Form des Funktionselements dies erfordert, polygonförmig, beispielsweise rechteckig oder quadratisch sein.

Die Prägung 14 wird so ausgeführt, dass ein Ringkragen 20 aus Blechmaterial entsteht und die Folge 15 im Bereich des Übergangs 22 des Blechmaterials in den Ringkragen 20 ausgebildet wird. Genauer gesagt wird die Prägung 14 im Bereich der radial inneren Seite der konusförmigen Vertiefung 24 im Blech, d.h. der entsprechenden konusförmigen Ringfläche 22 durch Anwendung eines (nicht gezeigten) Stempels ausgebildet mit einer zu der Form der Prägung komplementären Form, wobei das Blechteil während der Ausbildung der Prägung auf einer entsprechenden Matrize (nicht gezeigt) abgestützt wird. Dabei kann der Ringkragen in einer ersten Stufe ohne Prägung ausgebildet und die Prägung erst anschließend vorgesehen werden oder diese kann gleichzeitig mit der Herstellung des Ringkragens in einer Stufe hergestellt werden.

Die Figuren 2A und 2B zeigen anschließend die Anbringung des Funktionselements 12 auf das vorbereitete Blechteil 10. Es handelt sich bei dem Funktionselement 12 um das Element, das im Detail im europäischen Patent EP 1202834 B1 beschrieben und beansprucht wird. In dieser europäischen Patentschrift wird das Element 12 benutzt, um das Blechteil 10 zu durchstanzen, wobei ein Ringkragen ähnlich dem Ringkragen 20 im Blechteil während der Durchstanzung des Blechteils durch das Funktionselement 12 entsteht, da das Blechteil auf einer Matrize mit einer entsprechenden Ringvertiefung abgestützt ist. Danach wird das Material des Nietabschnitts 24 am unteren Ende des Funktionselements 12 durch den gerundeten Boden der Ringvertiefung in der Matrize nach außen in einen Rollkragen um den Ringkragen 28 herum geführt, um ein Nietbördel auszubilden, wie bei 26 in Fig. 2B gezeigt. D.h. der Ringkragen 20 ist von einer ringförmigen Nut aufgenommen, die durch die Verformung des unteren Endes des Nietabschnitts 24 des Funktionselements 12 entstanden ist. Ferner wird in der EP-B-1202834 wie auch hier gezeigt, das Material des ringförmigen Nietabschnitts 24 oberhalb des Blechteils zu einem Ringfalz gestaucht, wie bei 28 in Fig. 2B gezeigt. Dies führt dazu, dass das Material des Blechteils 10 im Randbereich des Stanzlochs 21 in einer Art Ringaufnahme des verformten Nietabschnitts des Funktionselements 12 eingeklemmt wird.

Im Gegensatz zu dem in der EP-B-1202834 beschriebenen Verfahrens wird hier das Funktionselement 12 durch das vorgestanzte Loch 21 im Blechteil 10 geführt. Die Matrize, die bei der Anbringung des Funktionselements 12 verwendet wird, hat aber eine Form entsprechend der Form der Matrize nach der EP-B-1202834 und das Funktionselement 12 wird genauso von oben auf das Blechteil und die Matrize zu gedrückt, wie in der EP-B-1202834 beschrieben. Allerdings ist es bei der vorliegenden Erfindung nicht zwingend erforderlich die Matrize mit Nuten oder Nasen im Bereich des Stempelansatzes bzw. des Übergangs von der ringförmigen Vertiefung in der Stirnseite vorzusehen, um eine Verdrehsicherung zu erreichen, da diese Funktion durch die erfindungsgemäße Blechvorbereitung erreicht wird.

Bei den Ausführungsformen, die in der EP-B-1202834 B1 beschrieben werden, kommen entweder keine Verdrehsicherungsmerkmale zum Einsatz oder es werden kleinere Verdrehsicherungsmerkmale wie Rillen oder Nasen im Bereich des das Nietbördel bildenden Bereichs des Funktionselements vorgesehen. Alternativ dazu wird in der EP-B-1202834 erwähnt, dass sich radial erstreckende Nasen entweder in der Matrize zur Ausbildung des Nietbördels und/oder in der Stirnfläche des den Ringfalz bildenden Stempels vorgesehen werden, die dann auch zu einer gegenseitigen Verformung des Blechteils und des anliegenden Bereichs des Nietbördels und/oder des Ringfalzes führen, die der Erhöhung der Verdrehsicherheit dienen.

Im Falle des vorliegenden Verfahrens wird die Verdrehsicherung anderweitig erreicht, und zwar einerseits durch die Prägung des Blechteils, die vor Anbringung des Funktionselements hergestellt wird und aus der Folge 15 von relativ zueinander erhöhten und vertieften Bereichen 16 bzw. 18 besteht und andererseits, dass bei Anbringung des Funktionselements 12 dieses gegen das Blechteil derart gedrückt wird, dass die Prägung 14 des Blechteils 10 zu einer komplementären Formgebung des Funktionselements im Bereich des Funktionselements führt, der mit der Prägung in Anlage kommt, d.h. im Bereich der Unterseite des Ringfalzes 28. Zwar ist die Ebene der Schnittzeichnung in Fig. 2B so gewählt, dass man nicht erkennen kann, dass das Material des Ringfalzes 28 in den vertieften Bereichen 18 der Prägung eingeflossen ist, es versteht sich aber, dass bei der Anbringung des Funktionselements die erheblichen Quetschkräfte, die auf den Ringfalz 28 wirken, dass dort vorhandene Blechmaterial dazu bringt, in die Vertiefungen 18 hinein zu fließen, wodurch eine Verzahnung zwischen dem Funktionselement 12 und dem Blechteil 10 entsteht, die eine erhebliche Verdrehsicherung bietet, d.h. einen entsprechenden Verdrehwiderstand erzeugt.

Bei der Anbringung des Funktionselements 12 werden, wie in der EP-B-1202834 beschrieben, zunächst über einen inneren Stempel (nicht gezeigt) Kräfte auf die obere Stirnseite 30 des Funktionselements 12 ausgeübt, die ausreichen, um den Nietbördel auszubilden und den Ringfalz 28 vorzuformen. Diese Kräfte führen nicht zu einer Verformung des Gewindes des Funktionselements 12, da der Bereich des Funktionselements 12 mit Gewinde 23 wesentlich dicker ausgebildet ist als der zylinderförmige Nietabschnitt 24, so dass nur der Bereich 24 verformt wird. Im letzten Stadium des Anbringungsverfahrens wird der Ringfalz 28 flach gepresst, d.h. noch weiter hinuntergedrückt als in Fig. 2B bezeigt, und zwar mittels eines rohrförmigen Außenstempels 32, der, wie ebenfalls in der EP-B-1202834 beschrieben, sich synchron mit dem nicht gezeigten Innenstempel bewegt, und dessen untere Stirnfläche direkt auf die Oberseite 34 des Ringfalzes 28 drückt, so dass die Verformungskräfte lediglich im Bereich des Nietabschnitts 24 des Funktionselements zwischen dem zylindrischen Außenstempel 32 und der unterhalb des Nietbördels vorgesehenen Matrize zur Wirkung kommen und für das entsprechende Fließverhalten des Materials des Nietabschnitts 24 in die Vertiefungen 18 hinein sorgt.

Konkret besteht die Folge 15 in diesem Beispiel aus den vertieften Bereichen 18, die zu Erhöhungen am Funktionselement, d.h. im unteren Bereich des Ringfalzes 28 in Fig. 2B, und aus gegenüber den vertieften Bereichen erhöhte Flächenbereiche 16, die zumindest im Wesentlichen zu keiner Verformung am Funktionselement 12 im Bereich des Ringfalzes führen.

Der Grund, warum in diesem Beispiel die erhöhten Bereiche 16 zu keiner (nennenswerten) Verformung im Bereich des Ringfalzes 28 führen, hat im Prinzip zwei Ursachen. Als erstes sind die erhöhten Bereiche 16 flächenmäßig deutlich größer als die vertieften Bereiche 18, so dass dort die Flächenpressungskräfte, die zur Wirkung gelangen, deutlich niedriger sind und unterhalb des Wertes liegen, der zu einer Verformung des Materials des Ringfalzes führen würde. Zum zweiten liegen die Flächenbereiche 16 bei der Ausbildung des Ringfalzes 28 zumindest im Wesentlichen parallel zu der lokalen Oberfläche des Ringfalzes im Bereich dieser Flächenbereiche 16, wodurch eine gleichmäßige Druckverteilung auftritt, die auch dazu beiträgt, die Kompressionskräfte, die auf das Blechmaterials einerseits und auf das Material des Nietabschnitts 24 andererseits wirken, in einem Bereich zu halten, die zu keiner nennenswerten Verformung führen. Die Lage ist natürlich bei den Vertiefungen 18 anders, da das Material des Nietabschnitts erst bei Vollendung der Anbringung des Funktionselements am Blechteil vollflächig an die konkaven Vertiefungen 18 zur Anlage gelangt.

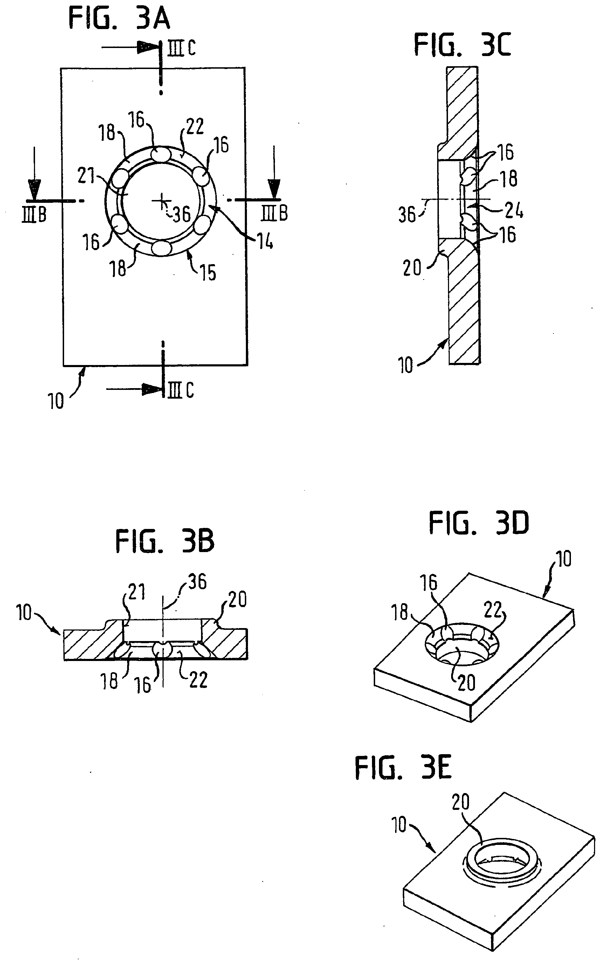

Eine andere grundlegende Art der Blechvorbereitung, d.h. der Ausbildung der Prägung, kommt auch in Frage und wird anschließend anhand der Fig. 3A bis 3E näher erläutert. Es werden für Teile, die Teilen der bisherigen Figuren entsprechen, die gleichen Bezugszeichen verwendet. Auch die bisherige Beschreibung gilt für die entsprechenden Teile bzw. Merkmale, sofern nichts Gegenteiliges gesagt wird. Dies gilt auch für die weitere Beschreibung.

Im Beispiel der Fig. 3A bis 3E besteht die Folge 15 aus erhöhten Bereichen 16, die zu Vertiefungen im Funktionselement führen, und aus gegenüber den erhöhten Bereichen vertieften Flächenbereichen 18, die zumindest im Wesentlichen zu keiner Verformung am Funktionselement 12 führen.

Wie aus den Fig. 3A bis 3E ersichtlich, haben die erhöhten Bereiche 16 in diesem Beispiel die gleiche Kontur wie die vertieften Bereiche 18 bei den Ausführungsformen der Fig. 1A-1D bzw. Fig. 2A. In entsprechender Weise haben die vertieften Bereiche 18 in diesem Beispiel die gleiche Kontur wie die erhöhten Bereiche 16 bei der bisherigen Ausführungsform. Die konvexe Form der erhöhten Bereiche 16 ist in diesem Beispiel besonders deutlich an der Schnittzeichnung gemäß Fig. 3C (Schnittebene IIIC-IIIC der Fig. 3A) zu sehen, wo die gerundete Form leicht zu sehen ist.

Das Verfahren zur Anbringung eines Funktionselements an das Blechteil 10 gemäß Fig. 3A bis 3E läuft genauso ab, wie im Zusammenhang mit den Fig. 2A, 2B beschrieben, mit der Ausnahme, dass jetzt die erhabenen, konvexen Bereiche 16 der Prägung 14 entsprechende Vertiefungen in der Unterseite des Ringfalzes 28 des Funktionselements 12 bei dessen Anbringung bilden, während die flächenmäßig größeren Bereiche 18 auch hier zu keiner wesentlichen Verformung am Funktionselement führen.

Die Wirkung der erhabenen Bereiche 16 bei der Ausbildung von Vertiefungen in der Unterseite des Ringfalzes 28 ist auch deshalb ausgeprägt, weil die erhöhten Bereiche 16 zunächst nur über eine kleine Fläche auf das Material des Funktionselements, d.h. auf das Material des Nietabschnitts 24 des Funktionselements bei der Ausbildung des Ringfalzes 28 wirken, so dass dort eine hohe Flächenpressung vorliegt, die die Ausbildung der Vertiefungen und der Verhakung zwischen dem Funktionselement und dem Blechmaterial begünstigt. Auch hier liegen die flächenmäßig größeren Bereiche 18 beim Abschluss des Anbringungsverfahrens im Wesentlichen parallel zu der lokalen Oberfläche des Ringfalzes 28 des Funktionselements 12, so dass auch aus diesem Grunde dort die Flächenpressung eher gering ist und keine Verformung des Funktionselements zu befürchten ist.

Es werden nunmehr einige weitere Beispiele einer erfindungsgemäße Blechvorbereitung beschrieben.

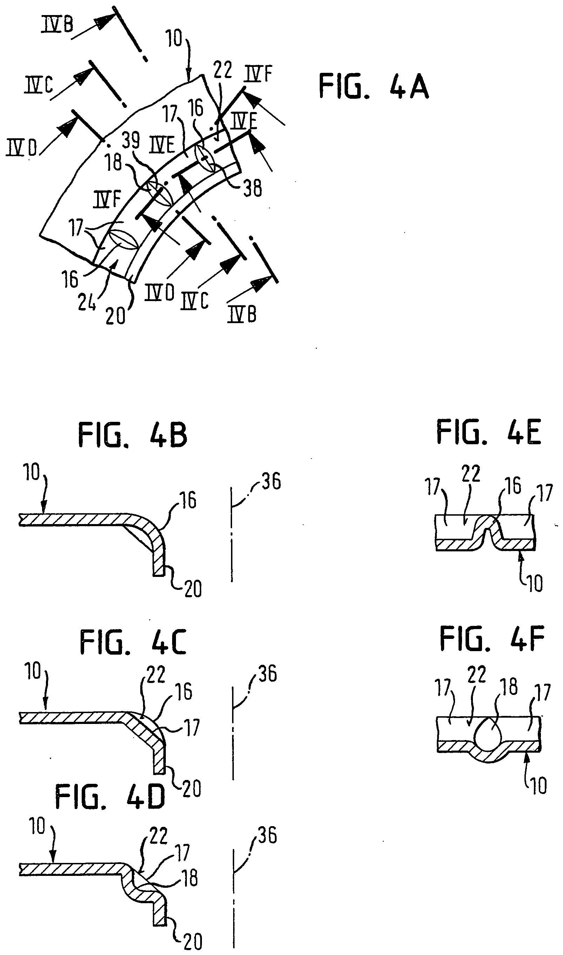

Um die zeichnerische Darstellung zu vereinfachen, wird in Fig. 4A das Blechteil 10 nur in einem Randbereich des Stanzlochs 13 gezeigt und das Blechteil wird nicht im gesamten Umriss gezeigt. Es ist aber aus Fig. 4A zu erkennen, dass die Grundform des Blechteils mit Ringkragen 20 und mit der Prägung 14 im Bereich des Übergangs von der Oberseite des Blechteils in den Ringkragen gleich gestaltet ist wie bei den bisherigen Ausführungsbeispielen. In diesem Beispiel sind die erhöhten Bereiche 16 und die vertieften Bereiche 18 abwechselnd auf der konusförmigen Ringfläche 22 vorgesehen, und zwar mit einem erheblichen Abstand zwischen den einzelnen Erhöhungen und Vertiefungen, die Zwischenbereiche 17 bilden. Es ist anzumerken, dass hier die erhöhten Bereiche 16 und die vertieften Bereiche 18 anstatt eine eher runde Kontur wie bisher eine eher längliche Kontur aufweisen, jedoch selbst von konvexer bzw. konkaver Form sind, wie beispielsweise aus den Fig. 4E und 4F hervorgeht.

Es ist auch anzumerken, dass die Schnittzeichnung der Fig. 4B entsprechend der Schnittlinie IVB-IVB der Fig. 4A, die Schnittzeichnung gemäß Fig. 4C entsprechend der Schnittebene IVC-IVC der Fig. 4A und die Schnittzeichnung der Fig. 4D entsprechend der Schnittebene IVD-IVD der Fig. 4A gezeichnet ist. Dagegen entsprechen die Schnittzeichnungen der Fig. 4E und 4F den Schnittebenen IVE-IVE bzw. IVF-IVF der Fig. 4A. Die Schnittzeichnungen der Fig. 4B bis 4D sind jeweils als Halbschnitte auf der linken Seite der mittleren Längsachse 36 des Stanzloches gezeigt.

Zwei Punkte sind aus Fig. 4A zu erkennen, die für die vorliegende Erfindung eine erhebliche Bedeutung haben. In diesem Beispiel besteht die Folge 15 aus erhöhten Bereichen 16, die zu Vertiefungen im Funktionselement 12 führen, und aus gegenüber den erhöhten Bereichen vertieften Bereichen 18 besteht, die zu Erhöhungen am Funktionselement führen, die jeweils im Bereich der Unterseite des Ringfalzes 28 des Funktionselements 12 in dessen geformten Zustand vorliegen. Der zweite wesentliche Punkt ist darin zu sehen, dass die Folge 15 hier nicht nur aus erhöhten Bereichen 16, die zu Vertiefungen im Funktionselement führen und aus gegenüber den erhöhten Bereichen vertieften Bereichen 18 besteht, die zu Erhöhungen am Funktionselement führen, sondern auch aus den Zwischenbereichen 17, die zumindest im Wesentlichen zu keiner Verformung am Funktionselement 12 führen.

Da in diesem Beispiel die erhöhten Bereiche 16 einen ausgeprägten Scheitel 38 aufweisen, ist leicht zu verstehen, dass sie zu Vertiefungen an der Unterseite des Ringfalzes 28 führen, wodurch ein verhaktes Ineinandergreifen des Blechmaterials und das Funktionselements entsteht. Ferner ist einzusehen, dass bei den vertieften Bereichen 18, die zu den erhöhten Bereichen am Funktionselement führen und welche eine spiegelsymmetrische Form mit Scheitel 39 aufweisen, das Material des Ringfalzes zunächst keine Unterstützung erfährt, so dass bei einem Fließverhalten des Materials des Ringfalzes dieses Material in die Vertiefungen 18 hineinfließen wird. Ferner ist ersichtlich, dass die Zwischenbereiche 17 eine Fläche aufweisen, die deutlich größer ist als die Fläche der erhöhten Bereiche 16 oder der vertieften Bereiche 18 und dass diese Flächenbereiche 17 zumindest im Wesentlichen parallel zu der Unterseite des Ringfalzes 28 liegen, so dass hier die Flächenpressung deutlich niedriger ausfällt und dort keine wesentliche Verformung des Materials des Funktionselements stattfindet.

Die erhöhten Bereiche 16 können im Allgemeinen eine gerundete oder spitz zulaufende konvexe Form aufweisen. In ähnlicher Weise können die vertieften Bereiche 18 eine gerundete oder spitz zulaufende konkave Form aufweisen.

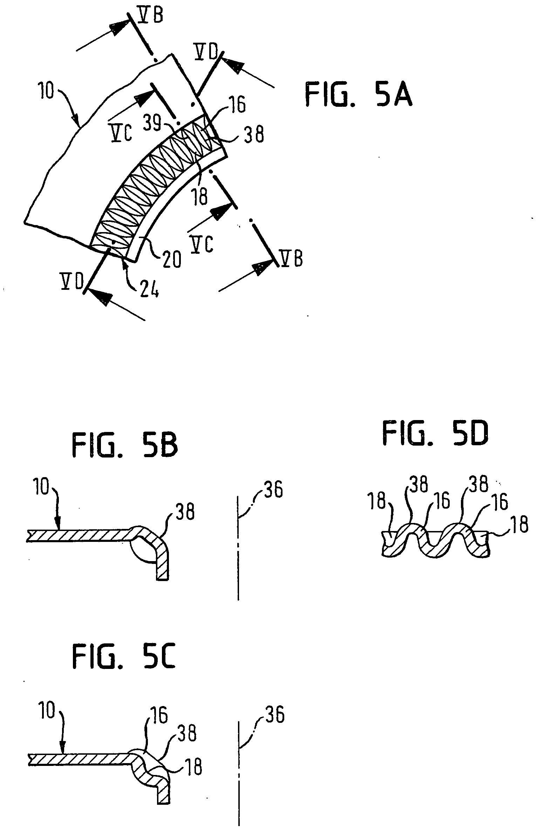

Es ist aber keineswegs erforderlich, solche Zwischenbereiche vorzusehen, wenn eine Verformung des Materials des Nietabschnitts sowohl an erhöhten Bereichen 16 als auch an vertieften Bereichen 18 des Blechmaterials stattfinden soll. Eine Möglichkeit, eine solche Verformung zu erreichen, ist in den Fig. 5A bis 5D gezeigt. Hier wechseln die erhöhten Bereiche 16 und die vertieften Bereiche 18 unmittelbar nacheinander ab, quasi ohne Zwischenbereiche 17. Zwar könnte man die Ansicht vertreten, dass die Übergänge zwischen den erhöhten Bereichen 16 und den vertieften Bereichen 18 Zwischenbereiche darstellen, es ist aber verständlich, dass die entsprechenden Bereiche 16, 18 fließend ineinander übergehen könnten, beispielsweise in Form einer wellenförmigen Verformung der Oberfläche des Blechteils im Bereich der Prägung 14, d.h. die Scheitellinien 38, 39 der erhöhten Bereiche 16 und der vertieften Bereiche 18 stellen sich radial erstreckende Linien dar wie hier gezeigt, aber die Übergänge zwischen den konvex gekrümmten erhöhten Bereiche 16 und den konkav gekrümmten vertieften Bereiche 18 sind fließend, d.h. auch durch Radiallinien bestimmt werden können, die in der lokalen Ebene der Ringfläche 22 liegen. Ansonsten geht die Form der erhöhten Bereiche 16 und der vertieften Bereiche 18 aus den Fig. 5A bis 5D hervor.

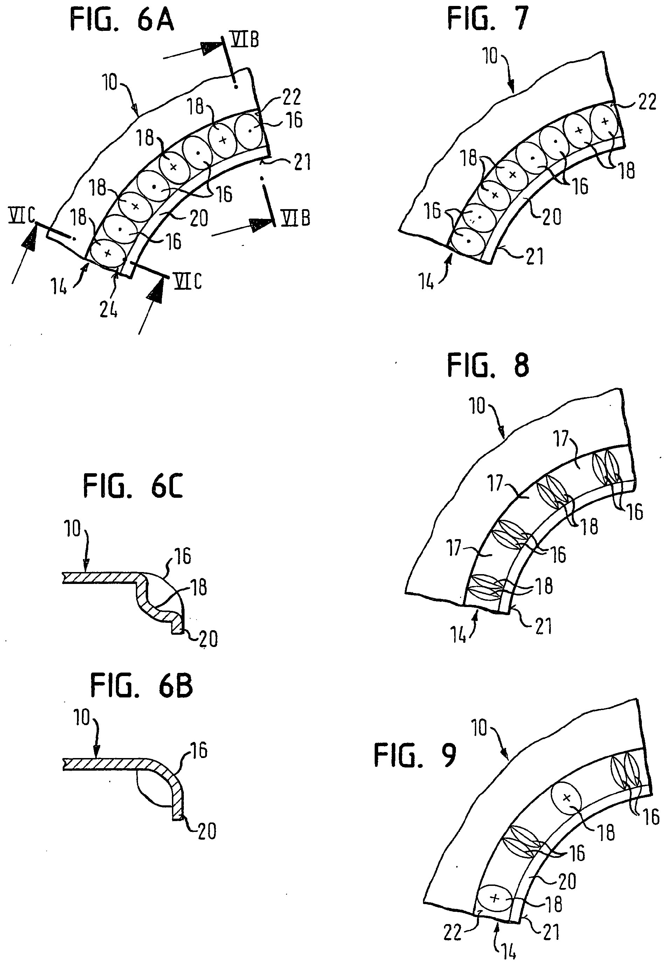

Eine alternative Möglichkeit, die erhöhten Bereiche 16 und die vertieften Bereiche 18 nebeneinander zu realisieren, ist in den Fig. 6A bis 6C gezeigt. Hier haben die entsprechenden Vertiefungen und Erhöhungen wiederum die Form von in Draufsicht eher runden oder leicht ovalen Erhöhungen bzw. Vertiefungen, die unmittelbar nebeneinander angeordnet sind, d.h. quasi ohne Zwischenbereiche.

Aus den Fig. 4A bis 4F bzw. 5A bis 5D bzw. 6A bis 6C ist auch ersichtlich, dass das Blechteil etwas dünner ausgebildet ist im Vergleich zum Blechteil der bisherigen Ausführungen, wobei die Prägung 14 an dem kritischen Bereich des Blechteils, der in Berührung mit der Unterseite des Ringfalzes gelangt, mit Werkzeugen erzeugt wird, die zu einer komplementären Formgebung auf der radial äußeren Seite des Ringkragens im Bereich des Übergangs in das Blechteil führt. Diese komplementäre Formgebung an der Außenseite des Übergangs, die auch nicht erforderlich ist, ist an sich nicht von größeren Bedeutung, könnte es aber, sofern die Formgebung wirklich ausgeprägt ist, erforderlich machen, eine Matrize zur Abstützung des Blechteil bei der Anbringung des Funktionselements zu verwenden, die ebenfalls eine komplementäre Formgebung hat, so dass das Blechteil vollflächig auf der Unterseite abgestützt ist.

Auch ist es keineswegs erforderlich, dass die Folge aus abwechselnden erhöhten und vertieften Bereichen besteht. Beispielsweise zeigt Fig. 7 eine Formgebung der einzelnen erhöhten Bereiche 16 und vertieften Bereiche 18 entsprechend den Fig. 6A bis 6C, wobei aber in diesem Beispiel zwei erhöhte Bereich 16 nebeneinander angeordnet sind und diese von zwei vertieften Bereichen 18 und diese wiederum von zwei erhöhten Bereichen 16 usw. gefolgt sind.

Fig. 8 zeigt vertiefte und erhöhte Bereiche 18 und 16 sowie Zwischenbereiche 17 mit einer Formgebung der einzelnen Bereiche entsprechend den Fig. 4A bis 4F, wobei aber hier zwei erhöhte Bereiche 16 nebeneinander angeordnet sind, diese von einem Zwischenbereich 17 gefolgt werden, der wiederum von zwei vertieften Bereichen gefolgt wird, der wiederum von einem Zwischenbereich 17 und dann von zwei weiteren erhöhten Bereichen 16 usw. gefolgt wird.

Es ist aber keinesfalls erforderlich, dass die erhöhten Bereiche 16 und die vertieften Bereiche 18 jeweils die gleiche Kontur haben. Als Beispiel zeigt Fig. 9 eine Prägung 14, bei der zwei erhöhte Bereiche 16 mit einer Form entsprechend den erhöhten Bereichen 16 der Fig. 4A nebeneinander liegen, von einem Zwischenbereich 17 mit in etwa der Form des Zwischenbereichs 17 der Fig. 4A gefolgt wird, die dann in einen vertieften Bereich 18 übergeht, der entsprechend den vertieften Bereichen 18 der Fig. 6A ausgebildet ist. Dieser vertiefte Bereich 18 wird dann von einem weiteren Zwischenbereich 17 gefolgt, der wiederum von zwei erhöhten Bereichen 16 usw. gefolgt wird. Letztendlich kommt eine Vielzahl von verschiedenen Formgebungen in Frage. Eine andere Möglichkeit wäre beispielsweise eine Art Riffelung vorzusehen, wo relativ enge Täler und Berge nebeneinander an einer Konusfläche wie 22 vorliegen.

Etwa überraschend ist, dass die vorliegende Erfindung auch dann funktioniert, wenn das Blechteil eine geringere Festigkeit als das Funktionselement aufweist. Dies kann zum Teil darin liegen, dass das Material des Blechteils während der Ausbildung der Prägung 14 eine Kaltverfestigung erfährt, was zu einer lokalen Steigerung der Festigkeit führt. Es liegt aber auch zum Teil daran, dass die erhöhten Bereiche der Prägung eine höhere Flächenpressung am Funktionselement ausüben. Auch haben domförmige, d.h. konvexe Bereiche, eine erhöhte Steifigkeit, ähnlich wie ein domförmiges Dach oder eine Brücke mit Gewölbe, die erhebliche, senkrecht gerichtete Lasten tragen können.

Es ist verständlich, dass, wenn die Erfindung schon bei weicheren Blechen funktioniert, sie um so besser funktioniert, wenn die Festigkeit des Blechteils annähernd dem des Funktionselements entspricht und noch besser, wenn es sich beim Blechteil um ein Blechteil aus einem höher festen Blech handelt, bzw. aus einem Blechteil, dass eine höhere Festigkeit als das Funktionselement aufweist.

Bei den bisherigen Ausführungsformen ist die Prägung 14 so ausgeführt, dass ein Ringkragen 20 aus Blechmaterial vorliegt und die Folge 15 im Bereich des Übergangs 22 des Blechmaterials in den Ringkragen 20 ausgebildet ist.

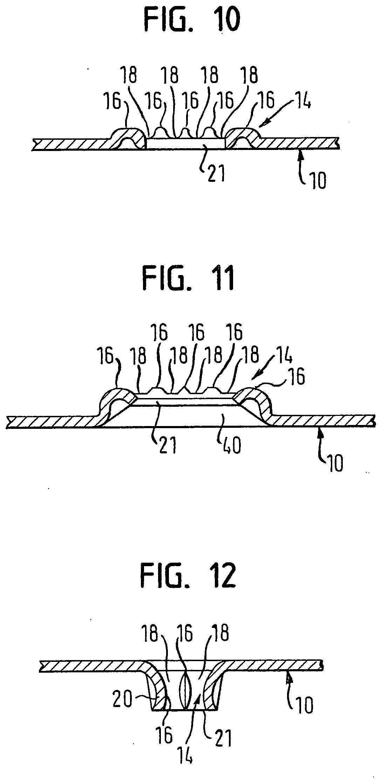

Dies ist allerdings nicht zwangsweise erforderlich. Beispielsweise zeigt Fig. 10 ein Blechteil 10 mit einer Prägung 14, die aus erhöhten Bereichen 16 und vertieften Bereichen 18 besteht, wobei die Prägung im Bereich des Lochrandes in einem waagerechten Teil des Blechteils um das Stanzloch herum angeordnet ist. Ein solches Blechteil könnte bei einer im Stand der Technik bekannten Nietmutter verwendet werden, bei der das Blechmaterial um das Stanzloch herum in eine vertiefte kreisförmige oder polygonale Aufnahme eines Mutterelements eingepresst wird.

Fig. 11 zeigt eine Ausbildung, bei der ein konusförmiger Ringkragen 40 aus dem Blechmaterial 10 geformt wird mit einem Stanzloch, das in der Mitte des konusförmigen Ringkragens liegt. An der konusförmigen Fläche des konusförmigen Ringkragens 40 befinden sich abwechselnd erhöhte Blechbereiche 16 und vertiefte Blechbereiche 18 in einer ringförmigen abwechselnden Folge um das Stanzloch herum. Es ist aus dem Stand der Technik bekannt, einen solchen konusförmigen Ringkragen 40 mit einem Element zu verwenden, dessen Nietabschnitt von oben kommend durch das Stanloch hindurch geführt wird. Bei der Umbördelung des Nietabschnitts des Befestigungselements wird der konusförmige Ringkragen 40 zumindest zum Teil flach gepresst, wodurch der Durchmesser des Stanzlochs verkleinert wird und das Material um das Nietbördel herum zu einem Würgegriff am Nietabschnitt des Befestigungselement gebracht wird. Dieses Verfahren ist im europäischen Patent EP-B-0539793 im Zusammenhang mit einem so genannten RSN-Element der Fa. Profil Verbindungstechnik GmbH & Co. KG beschrieben, und zwar entweder im Zusammenhang mit Befestigungselementen, die keine Verdrehsicherungsmerkmale aufweisen oder im Zusammenhang mit solchen, die Verdrehsicherungsmerkmale aufweisen. Bei der erfindungsgemäßen Auslegung des Blechteils entsprechend der Fig. 11 kann ein Element ohne Verdrehsicherungsmerkmale verwendet werden, aber dennoch eine hohe Verdrehsicherheit erreicht werden, und zwar ohne einen Kleber zu benötigen, wobei das Vorsehen eines Klebstoffs zusätzlich möglich wäre.

Auch sind selbststanzende Versionen eines so genannten RND-Elements der vorliegenden Anmelderin bekannt, wobei das RND-Element selbst in der EP-B-1116891 geschützt ist. Auch hier könnte ein selbststanzendes Element, das als Stanzstempel verwendet wird, zur Anwendung gelangen. Um eine solche Ausführungsform zu realisieren, was grundsätzlich auch bei den anderen bereits erwähnten Beispielen möglich ist, wird das Blechteil vorgeformt, um einen Ringkragen mit Prägung 14, jedoch ohne Stanzloch vorzusehen, und das Durchstanzen des Blechteils wird mittels des Nietabschnitts des Funktionselements durchgeführt, wie beispielsweise in der eingangs genannten EP-B-1202834 B1 für das Funktionselement 12 beschrieben ist.

Eine weitere Alternative zeigt die Fig. 12. Hier wird das Blechteil 10 mit einem in dieser Ausführungsform nach unten gerichteten Ringkragen versehen, wobei die Prägung 14 nicht im unmittelbaren Übergangsbereich des waagrechten Teils des Blechteils in den nach unten gerichteten Ringkragen vorgesehen ist, sondern radial innerhalb des Ringkragens. Bei diesem Beispiel besteht die Prägung 14 wiederum aus länglichen erhöhten Bereichen 16 und dazwischen angeordneten vertieften bzw. zurück versetzten Bereichen 18. Eine solche Prägung kann beispielsweise mit einem Einpresselement in Form eines so genannten EBF-Bolzens der Fa. Profil Verbindungstechnik GmbH & Co. KG verwendet werden, insbesondere mit einer abgewandelten Form des EBF-Bolzens, der selbst ohne Verdrehsicherungsmerkmale ausgebildet ist. Der EBF-Bolzen ist beispielsweise in der europäischen Patentschrift EP 0678679 bzw. in der EP-B-0958100 beschrieben. Wichtig bei der Ausführungsform gemäß Fig. 12 ist, dass bei Anbringung des EBF-Bolzens an dem Blechteil 10 der Schaftteil des Bolzenelements von oben kommend durch den Ringkragen 20 geführt wird und anschließend durch die Ausübung von Druck auf den Kopfteil des Bolzens und bei Abstützung des Ringkragens 20 in einer entsprechenden konusförmigen Vertiefung oder in einer entsprechend geformten Vertiefung einer Matrize das Blechmaterial in radialer Richtung an den Schaftteil des Bolzenelements geführt wird, wodurch der Ringkragen in die Gewindegänge des Bolzens eingepresst wird. Im vorliegenden Fall führen die erhöhten Bereiche 16 zu entsprechenden Gräben im Gewindebereich des Bolzens über ein, zwei oder mehrere Gewindegänge. Hierdurch wird eine Verhakung zwischen dem Blechmaterial und dem Bolzenelement erreicht, die die erforderliche Verdrehsicherung erzeugt. D.h. bei Verwendung des erfindungsgemäßen Verfahrens bzw. eines erfindungsgemäßen Blechteils mit einem Einpresselement wird das Element entgegen der bisherigen Verfahrensweise lokal durch die Prägung im Blechteil verformt, es findet aber kein Nietvorgang statt, weshalb die Bezeichnung "Einpresselement" gerechtfertigt ist.

Man sieht bei den Ausführungsformen gemäß Fig. 10 bis 12, dass auch hier eine komplementäre Formgebung auf der der Prägung abgewandten Seite des Blechteils vorliegt. Dies ist zwar bei manchen Blecharten, vor allem bei dünnen Blechen, beinahe immer der Fall, das Blechteil muss aber nicht mit einer solchen komplementären Form versehen werden, sofern ausreichendes Blechmaterial in der Nähe des Stanzlochs bzw. des vorgesehenen Stanzlochs vorhanden ist, um die Prägung ohne Formgebung der der Prägung abgewandten Seite des Blechteils zu erreichen.

Ferner soll darauf hingewiesen werden, dass die Außenumrisse für Blechteile, die in dieser Anmeldung gezeigt sind, beispielsweise in Fig. 1 oder Fig. 3, nur beispielhaft gewählt sind. Häufig ist es so, dass das Blechteil ein Stanzteil mit komplexerer Außenformgebung ist, wobei das Stanzteil eine dreidimensionale Formgebung aufweisen kann und die Prägung nur dort vorgesehen wird, wo die Anbringung eines Funktionselements vorgesehen ist. Auch kann es zweckmäßig sein, das Blechteil mit einer lokalen beispielsweise in Draufsicht kreisrunden Sicke zu versehen, d.h. eine kreisrunde Vertiefung im Blechteil und die Prägung im Bodenbereich der Sicke vorzusehen.

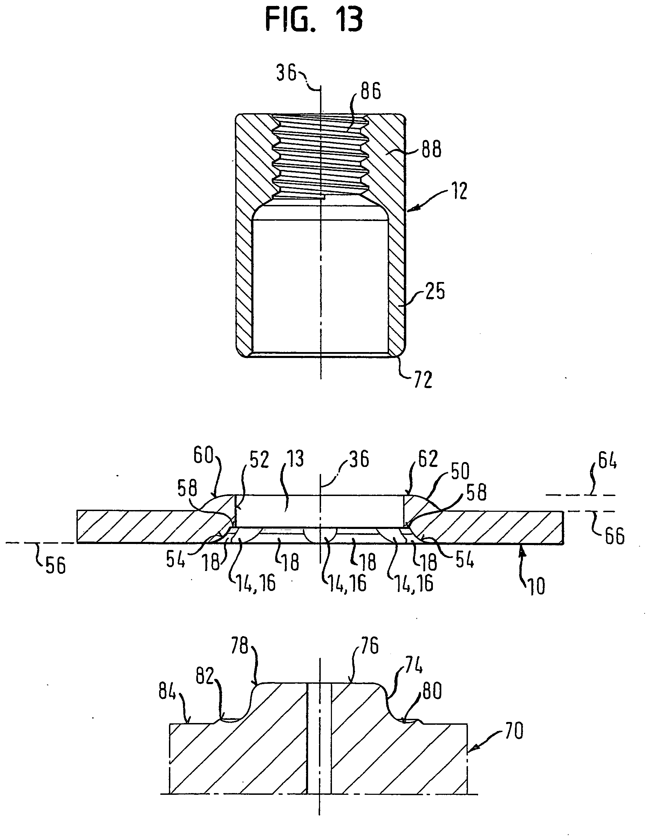

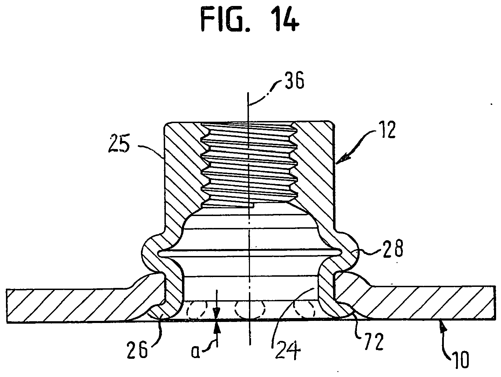

Ein alternatives erfindungsgemäßes Verfahren wird nunmehr anhand der Fig. 13 und 14 näher erläutert. Wie aus einem Vergleich der Fig. 13 und 14 ersichtlich ist, wird die Prägung 14 des Blechteils 10 auf dessen dem Nietbördel zugewandten Seite vorgenommen und führt zu der Ausbildung einer komplementären Prägung im Funktionselement im Bereich des Nietbördels. Diese komplementäre Prägung ist in Fig. 14 aufgrund der Schnittebene jedoch nicht direkt zu erkennen, sondern nur durch die gestrichelten Bereiche angedeutet.

Bei der Blechvorbereitung wird eine in Draufsicht zumindest im Wesentlichen kreisförmige Erhebung im Blechteil mittels eines entsprechend geformten Stempels und einer komplementären Matrize hergestellt, wobei in der Mitte der Erhebung ein Loch 13 mit einem Lochrand 52 erzeugt wird. Auf der der Erhebung gegenüberliegenden Seite nähert sich die Blechoberfläche über eine konvexe Rundung 54 dem Lochrand 52, wobei die Prägung 14 im Bereich dieser konvexen Rundung vorgesehen ist. Die Blechvorbereitung ist so vorgenommen, dass die konvexe Rundung 54 in eine in einer Ebene parallel zur lokalen Blechebene 56 außerhalb der Erhebung liegende Ringfläche 58 übergeht.

Auf der der Erhebung 50 benachbarten Seite des Blechteils 10, von der der Nietabschnitt 24 des Funktionselements 12 durch das Loch 13 hindurchgeführt wird, wird die Blechoberseite mit einer konvexen Rundung 60 versehen, die in eine Ringfläche 62 übergeht, die das Loch 13 umgibt und in einer Ebene 64 liegt, die parallel zur lokalen Blechebene 66 außerhalb der Erhebung 50 steht.

Wie aus Fig. 13 ersichtlich ist, wird die Prägung 14 ausgeführt, um lokale, die Verdrehsicherung zwischen dem Nietabschnitt und dem Blechteil bildende Vertiefungen 16 in der ringförmigen konvexen Rundung 54 auszubilden.

Das Loch 13 ist ein kreisförmiges Loch, das vorzugsweise nach oder bei der Ausbildung der Erhebung im Blechteil durch einen Stanzvorgang erzeugt wird, und zwar mit einer zylindrischen Wand 52, die vorzugsweise senkrecht zur lokalen Blechebene 56 bzw. 66 außerhalb der Erhebung 50 steht.

Das Nietbördel 26 der Fig. 14 wird unter Anwendung der Matrize 70 der Fig. 13 durch Umbördeln des ursprünglich zylindrischen Nietabschnittes 24 des Funktionselementes 12 um etwa 90°, bezogen auf die mittlere Längsachse 36 des Funktionselements 12 bzw. des Loches 13 erzeugt. Als Ergebnis weist das freie Stirnende 72 des Nietabschnitts nach der Ausbildung des Nietbördels in Richtung radial nach außen.

Man merkt, dass das Nietbördel 26 auf der der Erhebung 50 gegenüberliegenden Seite des Blechteils 10 nicht über die lokale Ebene 56 des Blechteils um die Erhebung herum hervorsteht und vorzugsweise gegenüber dieser Ebene um einen Abstand "a" im Bereich eines Zehntel Millimeters leicht zurück steht.

Die Matrize 70 der Fig. 13 weist einen mittleren Pfosten 74 auf mit einer Stirnseite 76, die an der Umlaufkante 78 abgerundet ist. Von der abgerundeten Umlaufkante 78 ausgehend divergiert der mittlere Pfosten 74 leicht in der Richtung von der Stirnseite 76 weg und geht in eine gerundete Ringvertiefung 80 über, die den Pfosten umgibt. Die äußere Begrenzungskante 82 der Ringvertiefung geht dann über eine schräggestellte Ringschulter in eine plane Ringfläche 84 der Matrize über, wobei die plane Ringfläche senkrecht zur Längsachse 36 steht. Bei der Ausbildung des Nietbördels wird der Nietabschnitt 12, der einen Außendurchmesser aufweist, der dem des Stanzlochs 13 entspricht (aber auch geringfügig kleiner oder größer sein kann) durch einen nicht dargestellten Setzkopf durch das Loch 13 im Blechteil hindurch und auf den Pfosten der Matrize gedrückt, wodurch das gerundete Ende 72 des Nietabschnitts vom Pfosten 74 leicht erweitert wird und anschließend im Bereich der gerundeten Vertiefung 80 um 90° oder etwas mehr als 90° umgelenkt wird. Wie üblich bei Anbringungsverfahren für Funktionselemente wird die Matrize vom unteren Werkzeug einer Presse oder von einer Zwischenplatte der Presse abgestützt, während der Setzkopf von der Zwischenplatte der Presse oder von einem oberen Werkzeug der Presse getragen wird. Nach der Durchführung des Nietabschnitts durch Loch 13 des Blechteils 10, das über Federn am unteren Werkzeug der Presse oder an einer Zwischenplatte der Presse abgestützt wird, wird der Setzkopf mit dem Funktionselement und dem Blechteil bei weiterem Schließen der Presse nach unten auf die Matrize zu gedrückt, bis im geschlossenen Zustand die Ringfläche 84 gegen die Unterseite des Blechteils 10 gedrückt wird. Die Ausbildung des Nietbördels ist jetzt abgeschlossen. Bei der Verformung des Nietbördels wird das Material des Nietabschnitts durch die Wirkung der Matrize in die Vertiefungen 16 gedrückt, von denen sechs um die Längsachse 36 des Funktionselements 12 angeordnet sind, wodurch die komplementäre Prägung am Nietbördel des Funktionselements entsteht und die gewünschte Verdrehsicherung erreicht wird. Anstatt die Matrize vom unteren Werkzeug der Presse oder von der Zwischenplatte abzustützen und den Setzkopf an der Zwischenplatte bzw. am oberen Werkzeug der Presse anzubringen, kann in einer umgekehrten Anordnung die Matrize am oberen Werkzeug der Presse oder an der Zwischenplatte angebracht werden und der Setzkopf an der Zwischenplatte bzw. am unteren Werkzeug der Presse montiert werden. Auch kann ein Roboter oder eine C-Gestelleinrichtung mit Kraftzylinder verwendet werden, um das Element und die Matrize aufeinander zu zu bewegen und die Anbringung des Elements am Blechteil zu bewerkstelligen.

Im Gegensatz zu der Darstellung der Fig. 2B wird hier an der Blechunterseite kein U-förmiger Nietabschnitt ausgebildet. Dieser läuft lediglich in einem etwa rechten Winkel auf das zuvor angestellte and mit Verdrehsicherungsmerkmalen versehene Blech an. Dies hat einerseits den Vorteil, dass die rückseitige Verriegelung nicht unterhalb der Blechebene ausgebildet wird und dass des Weiteren die Ausbildung des unteren Nietbördels durch das Blech gestoppt wird, so dass die Ausbildung des Ringfalzes oberhalb der Blechebene zwangsläufig initiiert wird. Damit ist diese Anordnung deutlich weniger von den Reibverhältnissen innerhalb der Nietmatrize abhängig als das bisherige Verfahren, das aus der EP 1202834 bekannt ist.

D.h., die Ausbildung des Ringfalzes bzw. Ringwulstes 28 ist hier mit relativ einfachen Mitteln in einem sauberen Ablauf und mit guter Qualität sichergestellt, ohne komplexe Maßnahmen ergreifen zu müssen, wie eine Zwangssteuerung von beweglichen Teilen einer Matrize. Dadurch, dass die Unterseite des Nietbördels 26 gegenüber der Unterseite des Blechteils (Blechebene 56) leicht zurückversetzt ist, kann ein weiteres Bauteil ohne weiteres an die Blechunterseite angeschraubt werden (durch einen Bolzen, der in das Gewinde 86 des Funktionselements 12 eingreift), ohne dass besondere Maßnahmen ergriffen werden müssen, um im Bereich des Nietbördels für eine plane Oberfläche sorgen zu müssen.

Aus Fig. 14 ist auch ersichtlich, dass der zylindrische Nietabschnitt auf der der Erhebung zugeordneten Seite des Blechteils zu dem Ringfalz 28 verquetscht wird, der das Blechteil 10 im Bereich der Erhebung 50 zwischen sich und dem Nietbördel 26 einklemmt.

Durch das erfindungsgemäße Verfahren ergibt sich somit ein Zusammenbauteil (Fig. 14) bestehend aus dem Blechteil 10 und dem Funktionselement 12 mit dem Körperteil 88 mit einem daran ausgebildeten rohr- bzw. zylinderförmigen Nietabschnitt 24, wobei das freie Ende 26 des Nietabschnitts 12 zu einem Nietbördel umgeformt ist, das auf der der Erhebung 50 abgewandten Seite des Blechteils 10 vorliegt und der Nietabschnitt 24 auf der der Erhebung zugeordneten Seite des Blechteils zu einem Ringfalz 28 verquetscht ist, der das Blechteil 10 im Bereich der Erhebung 50 zwischen sich und dem Nietbördel einklemmt und Material des Nietabschnittes 24 in den die Prägung 14 bildenden Vertiefungen 16 eingeformt ist.

An dieser Stelle soll zum Ausdruck gebracht werden, dass das Vorsehen einer Prägung 14 im Bereich einer gerundeten Fläche wie 54 nicht zwangsweise erforderlich ist. Die Fläche 54 könnte beispielsweise eine Konusfläche sein und die Vertiefungen könnten auch durch lokale Erhebungen ersetzt werden oder mit lokalen Erhebungen abwechseln, um die Verdrehsicherung zu erreichen. Auch könnte anstelle einer konvex gerundeten Fläche 54 eine konkav gerundete Fläche vorgesehen werden, wobei die Prägung dann zweckmäßigerweise durch lokale Erhebungen gebildet sein könnte. Alle bisher erläuterten Möglichkeiten für die Gestaltung der Vertiefungen bzw. Erhebungen zur Verdrehsicherung können auch hier analog verwendet werden.

Schließlich kann die Prägung 14 vollständig fehlen, z.B. dann, wenn es sich bei dem Funktionselement um einen Kugelbolzen handelt, beispielsweise nach der EP-Anmeldung 01989624.0, wo keine Verdrehsicherung nötig ist oder ausreichend durch Reibung sichergestellt werden kann. In so einem Fall liegt dann ein Zusammenbauteil bestehend aus einem Blechteil und einem Funktionselement vor, wobei das Funktionselement einen Körperteil 25 mit einem daran ausgebildeten rohr- bzw. zylinderförmigen Nietabschnitt wie 12 in Fig. 13 aufweist und das Blechteil 10, wie in Fig. 13, eine in Draufsicht zumindest im Wesentlichen kreisförmige Erhebung aufweist, wobei in der Mitte der Erhebung ein Loch 13 mit einem Lochrand 52 vorliegt und auf der der Erhebung gegenüberliegenden Seite die Blechoberfläche eine Vertiefung aufweist und über eine konvexe, konkave oder schräg gestellte Fläche sich dem Lochrand nähert, wobei das freie Ende 26 des Nietabschnitts 12 zu einem Nietbördel 26 umgeformt ist, das auf der der Erhebung 50 abgewandten Seite des Blechteils vorliegt und der Nietabschnitt 12 auf der der Erhebung zugeordneten Seite des Blechteils zu einem Ringfalz 28 verquetscht ist, der das Blechteil 10 im Bereich der Erhebung 70 zwischen sich und dem Nietbördel 26 einklemmt und das Nietbördel 26 auf der der Erhebung gegenüberliegenden Seite des Blechteils nicht über die lokale Ebene 56 des Blechteils um die Erhebung herum hervorsteht und vorzugsweise gegenüber dieser Ebene leicht zurück steht.

Das Funktionselement ist in diesem Beispiel vorzugsweise ein Kugelbolzen (nicht gezeigt) nach der genannten EP 01989624.0 mit einem kugelförmigen Körperteil, der über einen Schaftteil in den rohrförmigen Nietabschnitt übergeht, wobei die Länge des Nietabschnittes vorzugsweise ausreichend lang bemessen ist, um das Nietbördel, den axialen Anteil des Nietabschnittes im Blechteil und den Ringfalz auszubilden, ohne diese ausreichende Länge um mehr als etwa zehn Prozent zu übersteigen.

Alternativ kann es sich bei dem Funktionselement um ein Befestigungselement handeln mit einem ein Innengewinde 82 oder ein Außengewinde aufweisenden Körperteil 25, der unmittelbar oder mittelbar über einen Schaftteil in den rohrförmigen Nietabschnitt übergeht, wobei die Länge des Nietabschnittes vorzugsweise ausreichend lang bemessen ist, um das Nietbördel, den axialen Anteil des Nietabschnittes im Blechteil und den Ringfalz auszubilden, ohne diese ausreichende Länge um mehr als etwa zehn Prozent zu übersteigen. Wenn hier die Verdrehsicherung durch Reibung alleine nicht ausreicht, kann ein Klebstoff, beispielsweise ein Klebstoff, der unter Druck aushärtet, im Bereich der Nietverbindung zwischen dem Funktionselement und dem Blechteil zur Anwendung gelangen. Auch hier führt die Ausbildung der Nietverbindung entsprechend der Fig. 14 (aber ohne Prägung 14) zu dem Vorteil, dass ein weiteres Bauteil ohne weiteres an der Blechunterseite befestigt werden kann, da das Nietbördel nicht über die Blechunterseite hinausragt.

Das erfindungsgemäße Verfahren kann nicht nur mit Stahlblechen verwendet werden, sondern auch mit anderen Blechsorten, beispielsweise Alubleche, oder mit Magnesiumtafeln. Das Material des Funktionselements wird dann normalerweise angepasst gewählt und es kommen für die Befestigungselemente alle Materialien in Frage, die heute üblich sind.

Bei allen Ausführungsformen können auch als Beispiel für den Werkstoff der Funktionselemente alle Materialien genannt werden, die im Rahmen der Kaltverformung die Festigungswerte der Klasse 8 gemäß ISO-Standard oder höher erreichen, beispielsweise eine 35B2-Legierung gemäß DIN 1654. Die so gebildeten Befestigungselemente eignen sich u.a. für alle handelsüblichen Stahlwerkstoffe für ziehfähige Blechteile wie auch für Aluminium oder dessen Legierungen. Auch können Aluminiumlegierungen, insbesondere solche mit hoher Festigkeit, für die Funktionselemente benutzt werden, z.B. AlMg5. Auch kommen Funktionselemente aus höherfesten Magnesiumlegierungen wie bspw. AM50 in Frage.

Somit umfasst die vorliegende Erfindung auch ein Zusammenbauteil bestehend aus einem Blechteil und einem Funktionselement, wobei das Funktionselement einen Körperteil 25 mit einem daran ausgebildeten rohr- bzw. zylinderförmigen Nietabschnitt 24 aufweist und das Blechteil 10, eine in Draufsicht zumindest im Wesentlichen kreisförmige Erhebung 72 aufweist, wobei in der Mitte der Erhebung ein Loch 13 mit einem Lochrand 52 vorliegt und auf der der Erhebung gegenüberliegenden Seite die Blechoberfläche eine Vertiefung aufweist und über eine konvexe, konkave oder schräg gestellte Fläche sich dem Lochrand nähert, mit dem besonderen Kennzeichen, dass das freie Ende 72 des Nietabschnitts 24 zu einem Nietbördel 26 umgeformt ist, das auf der der Erhebung 50 abgewandten Seite des Blechteils vorliegt, dass der Nietabschnitt 24 auf der der Erhebung 50 zugeordneten Seite des Blechteils zu einem Ringfalz 28 verquetscht ist, der das Blechteil 10im Bereich der Erhebung 50 zwischen sich und dem Nietbördel 26 einklemmt und dass das Nietbördel 26 auf der der Erhebung gegenüberliegenden Seite des Blechteils nicht über die lokale Ebene 56 des Blechteils um die Erhebung herum hervorsteht und vorzugsweise gegenüber dieser Ebene 56leicht zurück steht.

Dabei wird die Umbördelung des Nietabschnittes vorzugsweise so vorgenommen, dass dieser um etwa 90°, bezogen auf die mittlere Längsachse des Funktionselements bzw. des Loches umgebördelt ist, so dass das freie Ende des Nietabschnittes zumindest im Wesentlichen radial nach außen weist.

Bei dem Funktionselement kann es sich um einen Kugelbolzen handeln mit einem kugelförmigen Körperteil, der über einen Schaftteil in den rohrförmigen Nietabschnitt übergeht, wobei die Länge des Nietabschnittes vorzugsweise ausreichend lang bemessen ist, um das Nietbördel, den axialen Anteil des Nietabschnittes im Blechteil und den Ringfalz auszubilden, ohne diese ausreichende Länge um mehr als etwa zehn Prozent zu übersteigen.

Es kann sich bei dem Funktionselement 12 außerdem um ein Befestigungselement handeln mit einem ein Innengewinde 86 oder ein Außengewinde aufweisenden Körperteil, der unmittelbar oder mittelbar über einen Schaftteil in den rohrförmigen Nietabschnitt übergeht, wobei die Länge des Nietabschnittes vorzugsweise ausreichend lang bemessen ist, um das Nietbördel, den axialen Anteil des Nietabschnittes im Blechteil und den Ringfalz auszubilden, ohne diese ausreichende Länge um mehr als etwa zehn Prozent zu übersteigen.

Das Funktionselement zur verdrehsicheren Anbringung an ein Blechteil, insbesondere an ein Blechteil nach einem der Ansprüche 12 bis 34 oder 32 bis 36, beispielsweise mittels des Verfahrens gemäß einem der Ansprüche 1 bis 11 oder 24 bis 31, kann ein Element sein, das mit Nietmerkmalen oder mit Stanz- und Nietmerkmalen oder mit Einpressmerkmalen ausgestattet ist, jedoch im Bereich der Anbringung am Blechteil vor der Anbringung keine eigenen Verdrehsicherungsmerkmale aufweist.

Insbesondere kann es sich bei dem Funktionselement um ein an sich bekanntes Funktionselement handeln, aus dem jedoch die eigenen Verdrehsicherungsmerkmale weggelassen sind, d.h. um ein Funktionselement, das keine eigenen Verdrehsicherungsmerkmale aufweist.

## Patentansprüche

1. Verfahren zur Herstellung eines Zusammenbauteils bestehend aus einem Blechteil (10) und einem an diesem durch einen Nietvorgang oder durch einen Niet- und Stanzvorgang oder durch einen Einpressvorgang angebrachten Funktionselement (12), wobei das Blechteil im Bereich der Anbringung des Funktionselements mit einer Prägung (14) vorgesehen ist,
die Prägung (14) vor Anbringung des Funktionselements (12) hergestellt wird und aus einer Folge (15) von relativ zueinander erhöhten und vertieften Bereichen (16, 18) besteht, bei Anbringung des Funktionselements (12) dieses gegen das Blechteil (10) derart gedrückt wird, dass die Prägung (14) des Blechteils zu einer komplementären Formgebung des Funktionselements im Bereich (28) des Funktionselements führt, der mit der Prägung (14) in Anlage kommt, und die Prägung (14) so ausgeführt wird, dass ein Ringkragen (20) aus Blechmaterial entsteht und die Folge im Bereich des Übergangs (22) des Blechmaterials in den Ringkragen (20) ausgebildet wird.

2. Verfahren nach Anspruch 1,
**dadurch gekennzeichnet,**
**dass** die Folge (15) ringförmig oder polygonförmig, beispielsweise rechteckig oder quadratisch ist.

3. Verfahren nach einem der vorhergehenden Ansprüche,
**dadurch gekennzeichnet,**
**dass** die Folge (15) aus erhöhten Bereichen (16), die zu Vertiefungen im Funktionselement führen, und aus gegenüber den erhöhten Bereichen vertieften Flächenbereichen (18) besteht, die zumindest im Wesentlichen zu keiner Verformung am Funktionselement (12) führen.

4. Verfahren nach einem der vorhergehenden Ansprüche 1 oder 2,
**dadurch gekennzeichnet,**
**dass** die Folge (15) aus vertieften Bereichen (18), die zu Erhöhungen am Funktionselement führen, und aus gegenüber den vertieften Bereichen erhöhten Flächenbereichen (16) besteht, die zumindest im Wesentlichen zu keiner Verformung am Funktionselement führen.

5. Verfahren nach einem der vorhergehenden Ansprüche 1 oder 2,
**dadurch gekennzeichnet,**
**dass** die Folge (15) aus erhöhten Bereichen (16), die zu Vertiefungen im Funktionselement (12) führen, und aus gegenüber den erhöhten Bereichen vertieften Bereichen (18) besteht, die zu Erhöhungen am Funktionselement führen.

6. Verfahren nach Anspruch 5,
**dadurch gekennzeichnet,**
**dass** die Folge (15) aus erhöhten Bereichen (16), die zu Vertiefungen im Funktionselement führen, aus gegenüber den erhöhten Bereichen (18) vertieften Bereichen besteht, die zu Erhöhungen am Funktionselement führen sowie aus Zwischenbereichen (17), die zumindest im Wesentlichen zu keiner Verformung am Funktionselement führen.

7. Verfahren nach einem der vorhergehenden Ansprüche,
**dadurch gekennzeichnet,**
**dass** die Prägung (14) im Bereich der radial inneren Seite einer konusförmigen Vertiefung (24) im Blech ausgebildet wird.

8. Verfahren nach einem der vorhergehenden Ansprüche,
**dadurch gekennzeichnet,**
**dass** ein Blechteil (10) gewählt wird, das eine geringere Festigkeit wie das Funktionselement (12) aufweist.

9. Verfahren nach einem der vorhergehenden Ansprüche 1 bis 7,
**dadurch gekennzeichnet,**
**dass** ein Blechteil (10) gewählt wird, das eine höhere Festigkeit wie das Funktionselement (12) aufweist.

10. Verfahren nach einem der vorhergehenden Ansprüche 1 bis 7,
**dadurch gekennzeichnet,**
**dass** ein Blechteil (10) gewählt wird, das zumindest im Wesentlichen die gleiche Festigkeit wie das Funktionselement (12) aufweist.

11. Verfahren zur Herstellung eines Zusammenbauteils, bestehend aus einem Blechteil (10) und einem an diesem durch einen Nietvorgang oder durch einen Niet- und Stanzvorgang oder durch einen Einpressvorgang angebrachten Funktionselement (12), wobei das Blechteil im Bereich der Anbringung des Funktionselements mit einer Prägung (14) versehen ist, die Prägung (14) vor Anbringung des Funktionselements (12) hergestellt wird und aus einer Folge (15) von relativ zueinander erhöhten und vertieften Bereichen (16, 18) besteht, bei Anbringung des Funktionselements (12) dieses gegen das Blechteil (10) derart gedrückt wird, dass die Prägung (14) des Blechteils zu einer komplementären Formgebung des Funktionselements im Bereich (28) des Funktionselements führt, der mit der Prägung (14) in Anlage kommt, die Prägung (14) des Blechteils (10) auf dessen einem Nietbördel (26) zugewandten Seite vorgenommen wird und zu der Ausbildung einer komplementären Prägung im Funktionselement (12) im Bereich des Nietbördels (26) führt, eine in Draufsicht zumindest im wesentlichen kreisförmige Erhebung (50) im Blechteil (10) vorgenommen wird, wobei in der Mitte der Erhebung (50) ein Loch (13) mit einem Lochrand (52) erzeugt wird, auf der der Erhebung (50) gegenüberliegenden Seite die Blechoberfläche über eine konvexe Rundung (54) sich dem Lochrand (52) nähert, wobei die Prägung (14) im Bereich dieser konvexen Rundung (54) vorgesehen ist, ein freies Stirnende (72) eines von der der Erhebung (50) benachbarten Seite des Blechteils (10) durch das Loch (13) hindurchgeführten Nietabschnitts (24) des Funktionselements (12) zu dem Nietbördel (26) umgeformt wird, das auf der von der Erhebung (50) abgewandten Seite des Blechteils (10) gegenüber der Prägung (14) zu liegen kommt, und der ursprünglich zylindrische Nietabschnitt (24) auf der der Erhebung (50) zugeordneten Seite des Blechteils (10) zu einem Ringfalz (28) verquetscht wird, der das Blechteil (10) im Bereich der Erhebung (50) zwischen sich und dem Nietbördel (26) einklemmt.

12. Verfahren nach Anspruch 11,
**dadurch gekennzeichnet,**
**dass** die Blechvorbereitung so vorgenommen wird, dass die konvexe Rundung (54) in eine in einer Ebene parallel zur lokalen Blechebene (56) außerhalb der Erhebung liegende Ringfläche (58) übergeht.

13. Verfahren nach einem der Ansprüche 11 oder 12,
**dadurch gekennzeichnet,**
**dass** auf der der Erhebung (50) benachbarten Seite des Blechteils, von der der Nietabschnitt (24) eines Funktionselements durch das Loch (13) hindurchgeführt wird, die Blechoberseite mit einer ringförmigen Fläche mit einer konvexen Rundung (60) versehen wird, die in eine Ringfläche (62) übergeht, die das Loch (13) umgibt und in einer Ebene (64) liegt, die parallel zur lokalen Blechebene (56) außerhalb der Erhebung (50) steht.

14. Verfahren nach einem der Ansprüche 11 bis 13,
**dadurch gekennzeichnet,**
**dass** die Prägung (14) ausgeführt wird, um lokale, die Verdrehsicherung zwischen dem Nietabschnitt und dem Blechteil bildende Vertiefungen (16) in der ringförmigen konvexen Rundung (54) auszubilden.

15. Verfahren nach einem der vorhergehenden Ansprüche 11 bis 14,
**dadurch gekennzeichnet,**
**dass** das Loch (13) ein kreisförmiges Loch ist mit einer zylindrischen Wand (52), die senkrecht zur lokalen Blechebene (56, 66) außerhalb der Erhebung (50) steht.

16. Verfahren nach einem der Ansprüche 11 bis 15,
**dadurch gekennzeichnet,**
**dass** das Nietbördel (26) durch Umbördeln eines ursprünglich zylindrischen Nietabschnittes (24) des Funktionselementes (12) um etwa 90°, bezogen auf die mittlere Längsachse des Funktionselements bzw. des Loches, erfolgt, vorzugsweise auf der der Erhebung (50) gegenüberliegenden Seite des Blechteils nicht über die lokale Ebene (56) des Blechteils um die Erhebung herum hervorsteht und - besonders bevorzugt - gegenüber dieser Ebene leicht zurück steht.

17. Blechteil (10) zur Verwendung mit einem an diesem durch einen Nietvorgang oder durch einen Niet- und Stanzvorgang oder durch einen Einpressvorgang angebrachten Funktionselement (12), wobei das Blechteil im Bereich der Anbringung des Funktionselements mit einer Prägung (14) vorgesehen ist,
die vor der Anbringung des Funktionselements (12) hergestellte Prägung (14) aus einer Folge von relativ zueinander erhöhten und vertieften Bereichen (16, 18) besteht und die Prägung (14) so ausgeführt ist, dass ein Ringkragen (20) aus Blechmaterial vorliegt und die Folge (15) im Bereich des Übergangs (22) des Blechmaterials in den Ringkragen (20) ausgebildet ist.

18. Blechteil nach Anspruch 17,
**dadurch gekennzeichnet,**
**dass** die Folge (15) ringförmig oder polygonförmig, beispielsweise rechteckig oder quadratisch ist.

19. Blechteil nach einem der vorhergehenden Ansprüche 17 oder 18,
**dadurch gekennzeichnet,**
**dass** die Folge (15) aus erhöhten Bereichen (16), die zu Vertiefungen im Funktionselement führen, und aus gegenüber den erhöhten Bereichen vertieften Flächenbereichen (18) besteht, die zumindest im Wesentlichen zu keiner Verformung am Funktionselement führen.

20. Blechteil nach Anspruch 19,
**dadurch gekennzeichnet,**
**dass** die vertieften Bereiche (18) flächenmäßig größer sind als die erhöhten Bereiche und/oder jeweils eine Fläche aufweisen, die zumindest im Wesentlichen parallel zu einem jeweiligen mit dieser in Anlage tretenden Bereich des Funktionselements (12) liegt.

21. Blechteil nach einem der vorhergehenden Ansprüche 17 oder 18,
**dadurch gekennzeichnet,**
**dass** die Folge (15) aus erhöhten Bereichen (16), die zu Vertiefungen im Funktionselement führen, und aus gegenüber den erhöhten Bereichen vertieften Bereichen (18) besteht, die zu Erhöhungen am Funktionselement führen.

22. Blechteil nach einem der vorhergehenden Ansprüche 17 oder 18,
**dadurch gekennzeichnet,**
**dass** die Folge (15) aus vertieften Bereichen (18), die zu Erhöhungen am Funktionselement führen, und aus gegenüber den vertieften Bereichen erhöhten Flächenbereichen (16) besteht, die zumindest im Wesentlichen zu keiner Verformung am Funktionselement führen.

23. Blechteil nach Anspruch 22,
**dadurch gekennzeichnet,**
**dass** die erhöhten Bereiche (16) flächenmäßig größer sind als die vertieften Bereiche (18) und/oder jeweils eine Fläche aufweisen, die zumindest im Wesentlichen parallel zu einem jeweiligen mit dieser in Anlage tretenden Bereich des Funktionselements liegt.

24. Blechteil nach einem der vorhergehenden Ansprüche 17 oder 18,
**dadurch gekennzeichnet,**
**dass** die Folge (15) aus erhöhten Bereichen (16), die zu Vertiefungen im Funktionselement führen und aus gegenüber den erhöhten Bereichen (16) vertieften Bereichen (18) besteht, die zu Erhöhungen am Funktionselement führen sowie aus Zwischenbereichen (17), die zumindest im Wesentlichen zu keiner Verformung am Funktionselement führen.

25. Blechteil nach einem der Ansprüche 19, 20, 21, 23 oder 24,
**dadurch gekennzeichnet,**
**dass** die erhöhten Bereiche (16) eine gerundete oder spitz zulaufende konvexe Form aufweisen.

26. Blechteil nach einem der Ansprüche 21, 22 oder 24,
**dadurch gekennzeichnet,**
**dass** die vertieften Bereiche (18) eine gerundete oder spitz zulaufende konkave Form aufweisen.

27. Blechteil nach einem der Ansprüche 24, 25 oder 26,
**dadurch gekennzeichnet,**
**dass** die Zwischenbereiche (17) flächenmäßig größer sind als die vertieften Bereiche (18) und die erhöhten Bereiche (16) und/oder jeweils eine Fläche aufweisen, die zumindest im Wesentlichen parallel zu einem jeweiligen mit dieser in Anlage tretenden Bereich des Funktionselements liegt.

28. Blechteil nach einem der vorhergehenden Ansprüche 17 bis 27,
**dadurch gekennzeichnet,**
**dass** das Blechteil eine in Draufsicht zumindest im wesentlichen kreisförmige Erhebung (50) aufweist, wobei in der Mitte der Erhebung ein Loch (13) mit einem Lochrand (52) vorliegt, und dass auf der der Erhebung gegenüberliegenden Seite die Blechoberfläche über eine konvexe Rundung (54) sich dem Lochrand (52) nähert, wobei die Prägung (14) im Bereich dieser konvexen Rundung (54) vorgesehen ist.

29. Blechteil nach Anspruch 28,
**dadurch gekennzeichnet,**
**dass** die Blechvorbereitung so vorgenommen ist, dass die konvexe Rundung (54) in eine in einer Ebene parallel zur lokalen Blechebene außerhalb der Erhebung liegende, das Loch (13) umgebende Ringfläche (58) übergeht.

30. Blechteil nach einem der Ansprüche 28 oder 29,
**dadurch gekennzeichnet,**
**dass** auf der der Erhebung (50) benachbarten Seite des Blechteils (10), von der der Nietabschnitt (24) eines Funktionselements (12) durch das Loch (13) hindurchgeführt wird, die Blechoberseite mit einer konvexen Rundung (60) versehen ist, die in eine Ringfläche (62) übergeht, die das Loch (13) umgibt und in einer Ebene liegt, die parallel zur lokalen Blechebene (66) außerhalb der Erhebung (50) steht.

31. Blechteil nach einem der Ansprüche 28 bis 30,
**dadurch gekennzeichnet,**
**dass** die Prägung (14) durch lokale, die Verdrehsicherung bildende Vertiefungen (16) in der ringförmigen konvexen Rundung (54) ausgebildet ist.

32. Blechteil nach einem der vorhergehenden Ansprüche 28 bis 31,
**dadurch gekennzeichnet,**
**dass** das Loch (13) ein kreisförmiges Loch ist mit einer zylindrischen Wand (52), die senkrecht zur lokalen Blechebene (56, 66) außerhalb der Erhebung steht.

33. Zusammenbauteil bestehend aus einem Blechteil (10) und einem an diesem durch einen Nietvorgang oder durch einen Niet- und Stanzvorgang oder durch einen Einpressvorgang angebrachten Funktionselement (12), wobei das Blechteil (10) im Bereich der Anbringung des Funktionselements (12) mit einer Prägung (14) versehen ist, die vor der Anbringung des Funktionselements (12) hergestellte Prägung (14) aus einer Folge (15) von relativ zueinander erhöhten und vertieften Bereichen (16, 18) besteht, das Funktionselement (12) in einem Bereich (28), der an der Prägung (24) des Blechteils (19) anliegt, eine zur Prägung (24) komplementäre Formgebung besitzt, die mit der komplementären Formgebung des Funktionselements (12) zusammenwirkende Prägung (14) des Blechteils (10) auf dessen einem Nietbördel (26) zugewandten Seite vorgesehen ist, eine in Draufsicht zumindest im Wesentlichen kreisförmige Erhebung (50) im Blechteil (10) vorgesehen ist, wobei in der Mitte der Erhebung (50) ein Loch (13) mit einem Lochrand (52) vorgesehen ist, auf der der Erhebung (50) gegenüberliegenden Seite die Blechoberfläche über eine konvexe Rundung (54) sich dem Lochrand (52) nähert, wobei die Prägung (14) im Bereich dieser konvexen Rundung (54) vorgesehen ist, ein freies Stirnende (72) eines von der der Erhebung (50) benachbarten Seite des Blechteils (10) durch das Loch (13) hindurchgeführten Nietabschnitts (24) des Funktionselements (12) zu dem Nietbördel (26) umgeformt ist, das auf der von der Erhebung (50) abgewandten Seite des Blechteils (10) der Prägung (14) gegenüberliegt, und der Nietabschnitt (24) auf der der Erhebung (50) zugeordneten Seite des Blechteils (10) zu einem Ringfalz (28) verquetscht ist, der das Blechteil (10) der Erhebung (50) zwischen sich und dem Nietbördel (26) einklemmt.

34. Zusammenbauteil nach Anspruch 33,
**dadurch gekennzeichnet,**
**dass** das Nietbördel (26) auf der der Erhebung (50) gegenüberliegenden Seite des Blechteils nicht über die lokale Ebene (56) des Blechteils um die Erhebung herum hervorsteht und vorzugsweise gegenüber dieser Ebene (56) leicht zurück steht, wobei die Umbördelung des Nietabschnittes (24) vorzugsweise so vorgenommen ist, dass dieser um etwa 90°, bezogen auf die mittlere Längsachse (36) des Funktionselements bzw. des Loches umgebördelt ist, so dass das freie Ende (72) des Nietabschnittes (24) zumindest im Wesentlichen radial nach außen weist, und - besonders bevorzugt - dass Material des Nietabschnittes (24) in den die Prägung (14) bildenden Vertiefungen (16) eingeformt ist.

## Claims

1. A method for the manufacture of a component assembly comprising a sheet metal part (10) and a functional element (12) attached to it by a riveting process or by a riveting and piercing process or by a press-in process, wherein the sheet metal part is provided in the region of the attachment of the functional element with an imprint (14); the imprint (14) is produced prior to attachment of the functional element (12) and consists of a sequence (15) of regions (16, 18) which are raised and recessed relative to one another; during the attachment of the functional element (12), it is pressed against the sheet metal part (10) in such a way that the imprint (14) of the sheet metal part leads to a complementary shaping of the functional element in the region (28) of the functional element which comes into contact with the imprint (14); and the imprint (14) is so executed that a ring collar (20) of sheet metal material arises and the sequence is formed in the region of the transition (22) of the sheet metal material into the ring collar (20).

2. A method in accordance with claim 1,
**characterized in that**
the sequence (15) is ring-like or polygonal, for example rectangular or square.

3. A method in accordance with one of the preceding claims,
**characterized in that**
the sequence (15) consists of raised regions (16) which lead to recesses in the functional element and of surface regions (18) recessed relative to the raised regions which lead at least substantially to no deformation at the functional element (12).

4. A method in accordance with one of the preceding claims 1 or 2,
**characterized in that**
the sequence (15) consists of recessed regions (18) which lead to raised formations at the functional element and of surface regions (16) raised relative to the recessed regions which lead to substantially no deformation at the functional element.

5. A method in accordance with one of the preceding claims 1 or 2,
**characterized in that**
the sequence (15) consists of raised regions (16) which lead to recesses in the functional element (12) and of regions (18) recessed relative to the raised regions which lead to raised formations at the functional element.

6. A method in accordance with claim 5,
**characterized in that**
the sequence (15) consists of raised regions (16) which lead to recesses in the functional element, of regions recessed relative to the raised regions (18) which lead to raised formations at the functional element and also of intermediate regions (17) which lead to at least substantially no deformation at the functional element.

7. A method in accordance with any one of the preceding claims,
**characterized in that**
the imprint (14) is formed in the region of the radially inner side of a conical recess (24) in the sheet metal.

8. A method in accordance with any one of the preceding claims,
**characterized in that**
a sheet metal part (10) is selected which has a lower strength than the functional element (12).

9. A method in accordance with any one of the preceding claims 1 to 7,
**characterized in that**
a sheet metal part (10) is selected which has a higher strength than the functional element (12).

10. A method in accordance with any one of the preceding claims 1 to 7,
**characterized in that**
a sheet metal part (10) is selected which has at least substantially the same strength as the functional element (12).

11. A method for the manufacture of a component assembly comprising a sheet metal part (10) and a functional element (12) attached to it by a riveting process or by a riveting and piercing process or by a press-in process, wherein the sheet metal part is provided in the region of the attachment of the functional element with an imprint (14); the imprint (14) is produced prior to the attachment of the functional element (12) and consists of a sequence (15) of regions (16, 18) which are raised and recessed relative to one another; during the attachment of the functional element (12), it is pressed against the sheet metal part (10) in such a way that the imprint (14) of the sheet metal part leads to a complementary shaping of the functional element in the region (28) of the functional element which comes into contact with the imprint (14); the imprint (14) of the sheet metal part (10) is effected at its side adjacent to a rivet bead (26) and leads to the formation of a complementary imprint in the functional element (12) in the region of the rivet bead (26); a raised portion (50) is effected in the sheet metal part (10) which is at least substantially circular in plan view, with a hole (13) having a hole margin (52) being produced at the center of the raised portion (50); the sheet metal surface approaches the hole margin (52) at the side opposite to the raised portion (50) via a convex rounded formation (54), with the imprint (14) being provided in the region of this convex rounded formation (54); a free end (72) of a rivet section (24) of the functional element (12) which is passed through the hole (13) from the side of the sheet metal part (10) adjacent to the raised formation (50) is reshaped to the rivet bead (26) which comes to lie opposite to the imprint (14) at the side of the sheet metal part (10) remote from the raised formation (50); and the originally cylindrical rivet section (24) is crushed at the side of the sheet metal part (10) associated with the raised portion (50) to form a ring fold (28) which traps the sheet metal part (10) between itself and the rivet bead (26) in the region of the raised formation (50).

12. A method in accordance with claim 11,
**characterized in that**
the sheet metal preparation is so effected that the convex round portion (54) merges into a ring surface (58) lying in a plane parallel to the local sheet metal plane (56) outside of the raised formation.

13. A method in accordance with one of the claims 11 or 12,
**characterized in that**
the sheet metal side is provided at the side of the sheet metal part adjacent to the raised formation (50) from which the rivet section (24) of a functional element is passed through the hole (13) with a ring-like surface having a convex rounded shape (60) which merges into a ring surface (62) which surrounds the hole (13) and lies in a plane (64) which is parallel to the local sheet metal plane (56) outside of the raised portion (50).

14. A method in accordance with any one of the claims 11 to 13,
**characterized in that**
the imprint (14) is executed in order to form local recesses (16) in the ring-like convex rounded formation (54) forming the security against rotation between the rivet section and the sheet metal part.

15. A method in accordance with any one of the preceding claims 11 to 14,
**characterized in that**
the hole (13) is a circular hole with a cylindrical wall (52) which stands perpendicular to the local sheet metal plane (56, 66) outside of the raised formation (50).

16. A method in accordance with any one of the claims 11 to 15,
**characterized in that**
the rivet bead (26) is formed by beading over an originally cylindrical rivet section (24) of the functional element (12) through about 90° related to the central longitudinal axis of the functional element or of the hole, preferably does not project beyond the local plane (56) of the sheet metal part around the raised formation at the side of the sheet metal part opposite to the raised formation (50) and is - particularly preferably - slightly set back relative to this plane.

17. A sheet metal part (10) for use with a functional element (12) attached to it by a riveting process or by a riveting and piercing process or by a press-in process, wherein the sheet metal part is provided in the region of the attachment of the functional element with an imprint (14);
the imprint (14) manufactured prior to the attachment of the functional element (12) consists of a sequence of regions (16, 18) which are raised and recessed relative to one another; and the imprint (14) is so designed that a ring collar (20) of sheet metal material is present and the sequence (15) is formed in the region of the transition (22) of the sheet metal material into the ring collar (20).

18. A sheet metal part in accordance with claim 17,
**characterized in that**
the sequence (15) is ring-like or polygonal, for example rectangular or square.

19. A sheet metal part in accordance with one of the preceding claims 17 or 18,
**characterized in that**
the sequence (15) consists of raised regions (16) which lead to recesses in the functional element and of surface regions (18) recessed relative to the raised regions which lead at least substantially to no deformation at the functional element.

20. A sheet metal part in accordance with claim 19,
**characterized in that**
the recessed regions (18) are larger area-wise than the raised regions and/or respectively have a surface which lies at least substantially parallel to a respective region of the functional element (12) which enters into contact with it.

21. A sheet metal part in accordance with one of the preceding claims 17 or 18,
**characterized in that**
the sequence (15) consists of raised regions (16) which lead to recesses in the functional element and of regions (18) recessed relative to the raised regions which lead to raised formations at the functional element.

22. A sheet metal part in accordance with one of the preceding claims 17 or 18,
**characterized in that**
the sequence (15) consists of recessed regions (18) which lead to raised formations at the functional element and of surface regions (16) raised relative to the recessed regions which lead at least substantially to no deformation at the functional element.

23. A sheet metal part in accordance with claim 22,
**characterized in that**
the raised regions (16) are larger area-wise than the recessed regions (18) and/or each have a surface which lies at least substantially parallel to a respective region of the functional element which enters into contact with it.

24. A sheet metal part in accordance with one of the preceding claims 17 or 18,
**characterized in that**
the sequence (15) consists of raised regions (16) which lead to recesses at the functional element and of regions (18) recessed relative to the raised regions (16) which lead to raised formations at the functional element and also of intermediate regions (17) which lead at least substantially to no deformation at the functional element.

25. A sheet metal part in accordance with any one of the claims 19, 20, 21, 23 or 24,
**characterized in that**
the raised regions (16) have a rounded convex shape or a shape converging to a point.

26. A sheet metal part in accordance with any one of the claims 21, 22 or 24,
**characterized in that**
the recessed regions (18) have a rounded concave shape or a shape converging to a point.

27. A sheet metal part in accordance with any one of the claims 24, 25 or 26,
**characterized in that**
the intermediate regions (17) are larger area-wise than the recessed regions (18) and the raised regions (16) and/or respectively have a surface which lies at least substantially parallel to a respective region of the functional element entering into contact with it.

28. A sheet metal part in accordance with any one of the claims 17 to 27,
**characterized in that**
the sheet metal part has an at least substantially circular raised portion (50) in plan view, with a hole (13) having a hole margin (52) being present at the center of the raised portion; and **in that** the side of the sheet metal surface lying opposite to the raised formation approaches the hole margin (52) via a convex rounded formation (54), with the imprint (14) being provided in the region of this convex rounded formation (54).

29. A sheet metal part in accordance with claim 28,
**characterized in that**
the sheet metal preparation is effected in such a way that the convex rounded formation (54) merges into a ring surface (58) surrounding the hole (13) and lying in a plane parallel to the local sheet metal plane outside of the raised formation.

30. A sheet metal part in accordance with one of the claims 28 or 29,
**characterized in that**,
at the side of the sheet metal part (10) adjacent to the raised portion (50) from which the rivet section (24) of a functional element (12) is passed through the hole (13), the sheet metal side is provided with a convex rounded formation (60) which merges into a ring surface (62) which surrounds the hole (13) and lies in a plane (64) which stands parallel to the local sheet metal plane (66) outside of the raised formation (50).

31. A sheet metal part in accordance with any one of the claims 28 to 30,
**characterized in that**
the imprint (14) is formed by local recesses (16) in the ring-like convex rounded formation (54) which form the security against rotation.

32. A sheet metal part in accordance with any one of the preceding claims 28 to 31,
**characterized in that**
the hole (13) is a circular hole with a cylindrical wall (52) which stands perpendicular to the local sheet metal plane (56, 66) outside of the raised portion.

33. A component assembly consisting of a sheet metal part (10) and a functional element (12) attached to it by a riveting process or by a riveting and piercing process or by a press-in process, wherein the sheet metal part (10) is provided in the region of the attachment of the functional element (12) with an imprint (14); the imprint (14) manufactured prior to the attachment of the functional element (12) consists of a sequence (15) of regions (16, 18) which are raised and recessed relative to one another; the functional element (12) has a shaping which is complementary to the imprint (24) in a region (28) which contacts the imprint (24) of the sheet metal part (19); the imprint (14) of the sheet metal part (10) cooperating with the complementary shaping of the functional element (12) is provided at the side of said sheet metal part adjacent to a rivet bead (26); a raised portion (50) is provided in the sheet metal part (10) which is at least substantially circular in plan view, with a hole (13) having a hole margin (52) being provided at the center of the raised portion (50); the sheet metal surface approaches the hole margin (52) at the side opposite to the raised portion (50) via a convex rounded formation (54), with the imprint (14) being provided in the region of this convex rounded formation (54); a free end (72) of a rivet section (24) of the functional element (12) which is passed through the hole (13) from the side of the sheet metal part (10) adjacent to the raised formation (50) is reshaped to the rivet bead (26) which lies opposite to the imprint (14) at the side of the sheet metal part (10) remote from the raised formation (50); and the rivet section (24) is crushed at the side of the sheet metal part (10) associated with the raised formation (50) to form a ring fold (28) which traps the sheet metal part (10) of the raised formation (50) between itself and the rivet bead (26).

34. A component assembly in accordance with claim 33,
**characterized in that**
the rivet bead (26) does not project beyond the local plane (56) of the sheet metal part around the raised formation at the side of the sheet metal part opposite to the raised formation (50) and is preferably slightly set back relative to this plane (56), with the beading over of the rivet section (24) preferably being effected in such a way that the latter is beaded over by approximately 90° related to the central longitudinal axis (36) of the functional element or of the hole so that the free end (72) of the rivet section (24) points at least substantially radially outwardly; and - particularly preferably - **in that** material of the rivet section (24) is formed into the recesses (16) which form the imprint (14).

## Revendications

1. Procédé de fabrication d'un composant d'assemblage constitué d'une pièce en tôle (10) et d'un élément fonctionnel (12) monté sur celle-ci par une opération de rivetage ou par une opération de rivetage et de poinçonnage ou par une opération de pressage, dans lequel la pièce en tôle est pourvue d'une empreinte (14) dans la zone du montage de l'élément fonctionnel, l'empreinte (14) est réalisée avant de monter l'élément fonctionnel (12) et est constituée par une succession (15) de zones (16, 18) surélevées et renfoncées les unes par rapport aux autres, lors du montage de l'élément fonctionnel (12) celui-ci est poussé contre la pièce en tôle (10) de telle sorte que l'empreinte (14) de la pièce en tôle mène à une mise en forme complémentaire de l'élément fonctionnel dans la zone (28) de l'élément fonctionnel, laquelle vient en appui avec l'empreinte (14), et l'empreinte (14) est réalisée de telle sorte qu'il en résulte un collet annulaire (20) en matériau de tôle et que la succession se réalise dans la zone de la transition (22) du matériau de tôle vers le collet annulaire (20).

2. Procédé selon la revendication 1,
**caractérisé en ce que**
la succession (15) est annulaire ou polygonale, par exemple rectangulaire ou carrée.

3. Procédé selon l'une des revendications précédentes,
**caractérisé en ce que**
la succession (15) est constituée par des zones surélevées (16) qui mènent à des renfoncements dans l'élément fonctionnel, et par des zones surfaciques (18) renfoncées par rapport aux zones surélevées, qui ne mènent au moins sensiblement pas à des déformations sur l'élément fonctionnel (12).

4. Procédé selon l'une des revendications précédentes 1 ou 2,
**caractérisé en ce que**
la succession (15) est constituée par des zones renfoncées (18) qui mènent à des surélévations sur l'élément fonctionnel, et par des zones surfaciques (16) surélevées par rapport aux zones renfoncées, qui ne mènent au moins sensiblement pas à des déformations sur l'élément fonctionnel.

5. Procédé selon l'une des revendications précédentes 1 ou 2,
**caractérisé en ce que**
la succession (15) est constituée par des zones surélevées (16) qui mènent à des renfoncements dans l'élément fonctionnel (12), et par des zones (18) renfoncées par rapport aux zones surélevées, qui mènent à des surélévations sur l'élément fonctionnel.

6. Procédé selon la revendication 5,
**caractérisé en ce que**
la succession (15) est constituée par des zones surélevées (16) qui mènent à des renfoncements dans l'élément fonctionnel, et par des zones renfoncées par rapport aux zones surélevées (18), qui mènent à des surélévations sur l'élément fonctionnel, ainsi que par des zones intermédiaires (17) qui ne mènent au moins sensiblement pas à des déformations sur l'élément fonctionnel.

7. Procédé selon l'une des revendications précédentes,
**caractérisé en ce que**
l'empreinte (14) est réalisée dans la zone du côté radialement intérieur d'un renfoncement conique (24) dans la tôle.

8. Procédé selon l'une des revendications précédentes,
**caractérisé en ce que**
l'on choisit une pièce en tôle (10) qui présente une solidité inférieure à celle de l'élément fonctionnel (12).

9. Procédé selon l'une des revendications précédentes 1 à 7,
**caractérisé en ce que**
l'on choisit une pièce en tôle (10) qui présente une solidité supérieure à celle de l'élément fonctionnel (12).

10. Procédé selon l'une des revendications précédentes 1 à 7,
**caractérisé en ce que**
l'on choisit une pièce en tôle (10) qui présente au moins sensiblement la même solidité que l'élément fonctionnel (12).

11. Procédé de fabrication d'un composant d'assemblage constitué d'une pièce en tôle (10) et d'un élément fonctionnel (12) monté sur celle-ci par une opération de rivetage ou par une opération de rivetage et de poinçonnage ou par une opération de pressage, dans lequel la pièce en tôle est pourvue d'une empreinte (14) dans la zone du montage de l'élément fonctionnel, l'empreinte (14) est réalisée avant de monter l'élément fonctionnel (12) et est constituée par une succession (15) de zones (16, 18) surélevées et renfoncées les unes par rapport aux autres, lors du montage de l'élément fonctionnel (12) celui-ci est poussé contre la pièce en tôle (10) de telle sorte que l'empreinte (14) de la pièce en tôle mène à une mise en forme complémentaire de l'élément fonctionnel dans la zone (28) de l'élément fonctionnel, laquelle vient en appui avec l'empreinte (14), et l'empreinte (14) de la pièce en tôle (10) est réalisée sur son côté tourné vers le rebord de rivetage (26) et mène à la réalisation d'une empreinte complémentaire dans l'élément fonctionnel (12) dans la zone du rebord de rivetage (26), on réalise dans la pièce en tôle (10) une surélévation (50) au moins sensiblement circulaire en vue de dessus, et au centre de la surélévation (50) on génère un trou (13) avec un bord de trou (52), et sur son côté opposé à la surélévation (50), la surface de tôle se rapproche du bord de trou (52) par un arrondi convexe (54), l'empreinte (14) est prévue dans la zone de cet arrondi convexe (54), et une extrémité frontale libre (72) d'une portion de rivet (24) de l'élément fonctionnel (12), passée à travers le trou (13) depuis le côté de la pièce en tôle (10) voisin de la surélévation (50), est déformée pour donner le rebord de rivetage (26) et vient se retrouver en regard de l'empreinte (14) sur le côté de la pièce en tôle (10) détourné de la surélévation (50), et la portion de rivet (24) à l'origine cylindrique est écrasée pour donner une feuillure annulaire (28) sur le côté de la pièce en tôle (10) associé à la surélévation (50), feuillure qui serre la pièce en tôle (10) dans la zone de la surélévation (50) entre elle-même et le rebord de rivetage (26).

12. Procédé selon la revendication 11,
**caractérisé en ce que**
on prépare la tôle de telle sorte que l'arrondi convexe (54) se transforme en une surface annulaire (58) située dans un plan parallèle au plan de tôle local (56) à l'extérieur de la surélévation.

13. Procédé selon l'une des revendications 11 ou 12,
**caractérisé en ce que**
sur le côté de la pièce en tôle voisin de la surélévation (50), on fait passer la portion de rivet (24) d'un élément fonctionnel à travers le trou (13), on munit la face supérieure de la tôle d'une surface annulaire avec un arrondi convexe (60) qui se transforme en une surface annulaire (62) qui entoure le trou (13) et qui se trouve dans un plan (64) situé parallèlement au plan de tôle local (56) à l'extérieur de la surélévation (50).

14. Procédé selon l'une des revendications 11 à 13,
**caractérisé en ce que**
l'on prévoit l'empreinte (14) pour réaliser des renfoncements (16) locaux, formant le blocage anti-rotation entre la portion de rivet et la pièce en tôle, dans l'arrondi convexe annulaire (54).

15. Procédé selon l'une des revendications précédentes 11 à 14,
**caractérisé en ce que**
le trou (13) est un trou circulaire avec une paroi cylindrique (52) qui se trouve perpendiculairement au plan de tôle local (56, 66) à l'extérieur de la surélévation (50).

16. Procédé selon l'une des revendications 11 à 15,
**caractérisé en ce que**
le rebord de rivetage (26) résulte d'un rabattement d'une portion de rivet (24) à l'origine cylindrique de l'élément fonctionnel (12) d'environ 90° par rapport à l'axe longitudinal médian de l'élément fonctionnel ou du trou, et ne dépasse de préférence pas, sur le côté de la pièce en tôle opposé à la surélévation (50), au-delà du plan local (56) de la pièce en tôle autour de la surélévation et - de préférence particulière - est légèrement en retrait par rapport à ce plan.

17. Pièce en tôle (10) destinée à l'utilisation avec un élément fonctionnel (12) monté sur celle-ci par une opération de rivetage ou par une opération de rivetage et de poinçonnage ou par une opération de pressage, dans laquelle la pièce en tôle est pourvue d'une empreinte (14) dans la zone du montage de l'élément fonctionnel,
l'empreinte (14) réalisée avant de monter l'élément fonctionnel (12) est constituée par une succession de zones (16, 18) surélevées et renfoncées les unes par rapport aux autres, et l'empreinte (14) est réalisée de telle sorte qu'il se présente un collet annulaire (20) en matériau de tôle et que la succession (15) est réalisée dans la zone de la transition (22) du matériau de tôle vers le collet annulaire (20).

18. Pièce en tôle selon la revendication 17,
**caractérisée en ce que**
la succession (15) est annulaire ou polygonale, par exemple rectangulaire ou carrée.

19. Pièce en tôle selon l'une des revendications précédentes 17 ou 18,
**caractérisée en ce que**
la succession (15) est constituée par des zones surélevées (16) qui mènent à des renfoncements dans l'élément fonctionnel, et par des zones surfaciques (18) renfoncées par rapport aux zones surélevées, qui ne mènent au moins sensiblement pas à des déformations sur l'élément fonctionnel.

20. Pièce en tôle selon la revendication 19,
**caractérisée en ce que**
les zones renfoncées (18) sont en termes de surface plus grandes que les zones surélevées et/ou présentent chacune une surface qui est au moins sensiblement parallèle à une zone respective de l'élément fonctionnel (12) qui vient en appui avec celle-ci.

21. Pièce en tôle selon l'une des revendications précédentes 17 ou 18,
**caractérisée en ce que**
la succession (15) est constituée par des zones surélevées (16) qui mènent à des renfoncements dans l'élément fonctionnel, et par des zones (18) renfoncées par rapport aux zones surélevées, qui mènent à des surélévations sur l'élément fonctionnel.

22. Pièce en tôle selon l'une des revendications précédentes 17 ou 18,
**caractérisée en ce que**
la succession (15) est constituée par des zones renfoncées (18) qui mènent à des surélévations sur l'élément fonctionnel, et par des zones surfaciques (16) surélevées par rapport aux zones renfoncées, qui ne mènent au moins sensiblement pas à des déformations sur l'élément fonctionnel.

23. Pièce en tôle selon la revendication 22,
**caractérisée en ce que**
les zones surélevées (16) sont en termes de surface plus grandes que les zones renfoncées (18) et/ou présentent chacune une surface qui est au moins sensiblement parallèle à une zone respective de l'élément fonctionnel qui vient en appui avec celle-ci.

24. Pièce en tôle selon l'une des revendications précédentes 17 ou 18,
**caractérisée en ce que**
la succession (15) est constituée par des zones surélevées (16) qui mènent à des renfoncements dans l'élément fonctionnel, et par des zones (18) renfoncées par rapport aux zones surélevées (16), qui mènent à des surélévations sur l'élément fonctionnel, ainsi que par des zones intermédiaires (17) qui ne mènent au moins sensiblement pas à des déformations sur l'élément fonctionnel.

25. Pièce en tôle selon l'une des revendications 19, 20, 21, 23 ou 24,
**caractérisée en ce que**
les zones surélevées (16) présentent une forme arrondie ou une zone convexe convergeant en pointe.

26. Pièce en tôle selon l'une des revendications 21, 22 ou 24,
**caractérisée en ce que**
les zones renfoncées (18) présentent une forme arrondie ou une zone concave convergeant en pointe.

27. Pièce en tôle selon l'une des revendications 24, 25 ou 26
**caractérisée en ce que**
les zones intermédiaires (17) sont en termes de surface plus grandes que les zones renfoncées (18) et que les zones surélevées (16), et/ou présentent chacune une surface qui est au moins sensiblement parallèle à une zone respective de l'élément fonctionnel qui vient en appui avec celle-ci.

28. Pièce en tôle selon l'une des revendications précédentes 17 à 27,
**caractérisée en ce que**
la pièce en tôle comprend une surélévation (50) au moins sensiblement circulaire en vue de dessus, et au centre de la surélévation (50) se présente un trou (13) avec un bord de trou (52), et sur le côté opposé à la surélévation, la surface de tôle se rapproche du bord de trou (52) par un arrondi convexe (54), l'empreinte (14) étant prévue dans la zone de cet arrondi convexe (54).

29. Pièce en tôle selon la revendication 28,
**caractérisée en ce que**
la préparation de la tôle est telle que l'arrondi convexe (54) se transforme en une surface annulaire (58) située dans un plan parallèle au plan de tôle local à l'extérieur de la surélévation et entourant le trou (13).

30. Pièce en tôle selon l'une des revendications 28 ou 29,
**caractérisée en ce que**
sur le côté de la pièce en tôle (10) voisin de la surélévation (50), depuis lequel la portion de rivet (24) d'un élément fonctionnel (12) est passée à travers le trou (13), la face supérieure de la tôle est munie d'un arrondi convexe (60) qui se transforme en une surface annulaire (62) qui entoure le trou (13) et qui se trouve dans un plan situé parallèlement au plan de tôle local (66) à l'extérieur de la surélévation (50).

31. Pièce en tôle selon l'une des revendications 28 à 30,
**caractérisée en ce que**
l'empreinte (14) est réalisée par des renfoncements (16) locaux formant le blocage antirotation dans l'arrondi convexe annulaire (54).

32. Pièce en tôle selon l'une des revendications précédentes 28 à 31,
**caractérisée en ce que**
le trou (13) est un trou circulaire avec une paroi cylindrique (52) qui se trouve perpendiculairement au plan de tôle local (56, 66) à l'extérieur de la surélévation (50).

33. Composant d'assemblage constitué d'une pièce en tôle (10) et d'un élément fonctionnel (12) monté sur celle-ci par une opération de rivetage ou par une opération de rivetage et de poinçonnage ou par une opération de pressage,
dans lequel
la pièce en tôle (10) est pourvue d'une empreinte (14) dans la zone du montage de l'élément fonctionnel (12),
l'empreinte (14) est réalisée avant de monter l'élément fonctionnel (12) et est constituée par une succession (15) de zones (16, 18) surélevées et renfoncées les unes par rapport aux autres,
dans une zone (28) qui s'appuie contre l'empreinte (24) de la pièce en tôle (10), l'élément fonctionnel (12) possède une conformation complémentaire à l'empreinte (14),
l'empreinte (14) de la pièce en tôle (10) coopérant avec la conformation complémentaire de l'élément fonctionnel (12) est prévue sur son côté tourné vers un rebord de rivetage (26),
il est prévu une surélévation (50) au moins sensiblement circulaire en vue de dessus dans la pièce en tôle (10),
au centre de la surélévation (50) est prévu un trou (13) avec un bord de trou (52),
sur le côté opposé à la surélévation (50), la surface de tôle se rapproche du bord de trou (52) par un arrondi convexe (54),
l'empreinte (14) est prévue dans la zone de cet arrondi convexe (54),
et une extrémité frontale libre (72) d'une portion de rivet (24) de l'élément fonctionnel (12), passée à travers le trou (13) depuis le côté de la pièce en tôle (10) voisin de la surélévation (50), est mise en forme pour donner le rebord de rivetage (26) et vient se retrouver en regard de l'empreinte (14) sur le côté de la pièce en tôle (10) détourné de la surélévation (50),
et la portion de rivet (24) est écrasée pour donner une feuillure annulaire (28) sur le côté de la pièce en tôle (10) associé à la surélévation (50), feuillure qui serre la pièce en tôle (10) entre elle-même et le rebord de rivetage (26).

34. Composant d'assemblage selon la revendication 33,
**caractérisé en ce que**
le rebord de rivetage (26) sur le côté de la pièce en tôle opposé à la surélévation (50) ne dépasse pas au-delà du plan local (56) de la pièce en tôle autour de la surélévation et est de préférence légèrement en retrait par rapport à ce plan (56), le rabattement de la portion de rivet (24) étant réalisé de préférence de telle sorte que celle-ci est rabattue d'environ 90° par rapport à l'axe longitudinal médian (36) de l'élément fonctionnel ou du trou, de telle sorte que l'extrémité libre (72) de la portion de rivet (24) est dirigée au moins sensiblement radialement vers l'extérieur, et que - de préférence particulière - le matériau de la portion de rivet (24) est conformé dans les renfoncements (16) formant l'empreinte (14).
